# EUROPEAN PATENT APPLICATION

(11) **EP 4 560 961 A1**
(43) Date of publication of application: **28.05.2025**
(21) Application number: 23851427.7
(22) Date of filing: 28.06.2023
(51) Int. Cl.: H04L 5/00, H04W 72/04

(54) **REFERENCE SIGNAL PORT INDICATION METHOD AND APPARATUS**

(30) Priority: 12.08.2022 CN 202210970471
(71) Applicant: Huawei Technologies Co., Ltd., Shenzhen, Guangdong 518129 (CN)
(72) Inventor: GAO, Junhui, Shenzhen, Guangdong 518129 (CN); XU, Jun, Shenzhen, Guangdong 518129 (CN); JIN, Huangping, Shenzhen, Guangdong 518129 (CN)
(74) Representative: Goddar, Heinz J.
(86) International application number: PCT/CN2023/103471
(87) International publication number: WO 2024/032200

(57) **Abstract**

This application relates to the field of communication technologies. A reference signal port indication method and an apparatus are provided, to indicate a port used for a reference signal. A network device generates first information and second information, and sends the first information and the second information to a terminal device. The first information indicates one or more reference port indices. The second information indicates a manner of determining one or more target port indices based on the one or more reference port indices indicated by the first information. The one or more target port indices indicate one or more ports used for a reference signal. The one or more ports used for the reference signal may be indicated by the first information and the second information.

## Description

### CROSS-REFERENCE TO RELATED APPLICATIONS

This application claims priority to Chinese Patent Application No. 202210970471.X, filed with the China National Intellectual Property Administration on August 12, 2022 and entitled "REFERENCE SIGNAL PORT INDICATION METHOD AND APPARATUS", which is incorporated herein by reference in its entirety.

### TECHNICAL FIELD

Embodiments of this application relate to the field of communication and the like, and in particular, to a reference signal port indication method and an apparatus.

### BACKGROUND

A 5th generation (5th generation, 5G) system or new radio (new radio, NR) has higher requirements on a system capacity, spectral efficiency, and the like. A massive (massive) multiple-input multiple-output (multiple-input multiple-output, MIMO) technology plays an important role in the spectral efficiency of the system. To use a spatial degree of freedom brought by the MIMO technology, a receiver with good performance needs to be designed in both uplink transmission and downlink transmission for data demodulation. The receiver performance depends on accuracy of equivalent channel estimation to a large extent. The equivalent channel may be understood as a product of a channel matrix and a precoding matrix.

To improve uplink and downlink transmission performance, a demodulation reference signal (demodulation reference signal, DMRS) may be used for uplink and downlink equivalent channel estimation, to demodulate data. The DMRS is sent together with the data, and is precoded by using a same precoding matrix as the data. One DMRS port is allocated to each layer of data, and an equivalent channel of the layer of data is estimated by using a DMRS sent through the DMRS port.

With massive growth of 5G devices and development of high-data-rate services, an increase in a quantity of transport layers is becoming a mainstream direction of MIMO evolution. In addition, a developing advanced signal processing technology may also enable data transmission of more layers. Therefore, more orthogonal DMRS ports are needed, and how to effectively indicate a DMRS port used for a reference signal is a technical problem that needs to be resolved.

### SUMMARY

Embodiments of this application provide a reference signal port indication method and an apparatus, to indicate an index of a reference signal port that needs to be scheduled.

According to a first aspect, a reference signal port indication method is provided. The method may be performed by a network device, or may be performed by a component used in the network device, for example, a chip or a processor. An example in which the method is performed by the network device is used below for description. The network device generates first information and second information. The network device sends the first information and the second information to a terminal device. The first information indicates one or more reference port indices. The second information indicates that a first set is used as target port indices, or the second information indicates that a part of port indices in the first set are used as one or more target port indices. The first set includes the one or more reference port indices and one or more port indices obtained by adding X to each of the reference port indices, and X is an integer greater than or equal to 4. The one or more target port indices indicate one or more ports used for a reference signal.

In this application, the first information and the second information indicate the one or more port indices (namely, the one or more target port indices) used for the reference signal. The first information and the second information may indicate a port index before expansion, may indicate a port index after expansion, or may indicate both the port index before expansion and the port index after expansion.

In a possible implementation, the reference port index and the reference port index+X are in a same code division multiplexing CDM group. For any port index a, the port indices a and a+X are in a same CDM group. When both the port indices (for example, the port indices a and a+X) before and after expansion are indicated, such scheduled ports are in one CDM group, so that time-frequency resources occupied by a reference signal (for example, a DMRS) are reduced, or transmit power of the reference signal (for example, the DMRS) may be concentrated in one CDM group.

In a possible implementation, when the second information indicates that the port indices in the first set are used as the target port indices, a quantity of the reference port indices is less than or equal to 2. When the quantity of the reference port indices is less than or equal to 2, a quantity of corresponding target port indices is less than or equal to 4. In this way, reference signal (for example, DMRS) ports corresponding to four streams may be all in one CDM group, so that time-frequency resources occupied by a reference signal are reduced, or transmit power of the reference signal may be concentrated in one CDM group.

In a possible implementation, when the second information indicates that the part of port indices in the first set are used as the target port index, a quantity of the reference port indices is equal to 2. In this way, reference signal (for example, DMRS) ports corresponding to four streams may be all in one CDM group, so that time-frequency resources occupied by a reference signal are reduced, or transmit power of the reference signal may be concentrated in one CDM group.

In a possible implementation, the first information includes row index information in a correspondence relationship, and the correspondence relationship indicates an association relationship between a row index and one or more port indices.

In a possible implementation, in the correspondence relationship, the row index is a first value, and the plurality of port indices include 7, 9, and 19; or in the correspondence relationship, the row index is a second value, and the plurality of port indices include 11, 21, and 23.

In a possible implementation, when the reference port indices indicated by the first information include 0, 1, and 2, the second information indicates that the port indices 0, 1, and 0+X are used as the target port indices, or the port indices 2, 1+X, and 2+X are used as the target port indices; or when the reference port indices indicated by the first information include 0, 1, and 2, the second information indicates that the port indices 0, 1, and 1+X are used as the target port indices, or the port indices 2, 0+X, and 2+X are used as the target port indices. The port indices 0 and 1 are in a same CDM group, and the port index 2 is in another CDM group. In combination with port expansion, the port indices 0, 1, 0+X, and 1+X are in a same CDM group, and the port indices 2 and 2+X are in another CDM group. When the second information indicates that the port indices 0, 1, and 0+X (or the port indices 0, 1, and 1+X) are used as the target port indices, such scheduled ports are in one CDM group, so that time-frequency resources occupied by a reference signal (for example, a DMRS) are reduced, or transmit power of the reference signal may be concentrated in one CDM group.

In a possible implementation, the first information includes a row index 20.

In a possible implementation, when the reference port indices indicated by the first information include 3, 4, and 5, the second information indicates that the port indices 4, 5, and 4+X are used as the target port indices, or the port indices 3, 3+X, and 5+X are used as the target port indices; or when the reference port indices indicated by the first information include 3, 4, and 5, the second information indicates that the port indices 4, 5, and 5+X are used as the target port indices, or the port indices 3, 3+X, and 4+X are used as the target port indices. The port indices 4 and 5 are in a same CDM group, and the port index 3 is in another CDM group. In combination with port expansion, the port indices 4, 5, 4+X, and 5+X are in a same CDM group, and the port indices 3 and 3+X are in another CDM group. When the second information indicates that the port indices 4, 5, and 4+X (or the port indices 4, 5, and 5+X) are used as the target port indices, such scheduled ports are in one CDM group, so that time-frequency resources occupied by a reference signal (for example, a DMRS) are reduced, or transmit power of the reference signal may be concentrated in one CDM group.

In a possible implementation, the first information includes a row index 21.

In a possible implementation, X=4, or X=8, or X=6, or X=12. For example, X is an increment of a maximum quantity of supported reference signal (for example, DMRS) ports after expansion compared with a maximum quantity of supported DMRS ports before expansion. For example, before expansion, a single-symbol DMRS of type 1 support a maximum of four DMRS ports. If the single-symbol DMRS of type 1 support a maximum of eight DMRS ports after expansion, X=4. Considering compatibility with double-symbol ports of a terminal user that does not support port expansion, a value of X may alternatively be 8. For example, before expansion, double-symbol DMRS of type 1 support a maximum of eight DMRS ports. If the double-symbol DMRS of type 1 support a maximum of 16 DMRS ports after expansion, X=8. For example, before expansion, a single-symbol DMRS of type 2 support a maximum of six DMRS ports. If the single-symbol DMRS of type 2 support a maximum of 12 DMRS ports after expansion, X=6. Considering compatibility with double-symbol ports of a terminal user that does not support port expansion, a value of X may alternatively be 12. For example, before expansion, double-symbol DMRS of type 2 support a maximum of 12 DMRS ports. If the double-symbol DMRS of type 2 support a maximum of 24 DMRS ports after expansion, X=12. In a possible implementation, the first information is carried in downlink control information DCI.

In a possible implementation, the second information is carried in downlink control information DCI, or is carried in radio resource control RRC.

In a possible implementation, the network device may further send a third indication to the terminal device. The third indication indicates that a plurality of target port indices are associated with one codeword. The terminal device is notified, through the third indication, that this solution is applicable to a scenario in which there is one codeword.

According to a second aspect, a reference signal port indication method is provided. The method may be performed by a terminal device, or may be performed by a component used in the terminal device, for example, a chip or a processor. An example in which the method is performed by the terminal device is used below for description. The terminal device receives first information and second information. The first information indicates one or more reference port indices. The second information indicates that a first set is used as target port indices, or the second information indicates that a part of port indices in the first set are used as one or more target port indices. The first set includes the one or more reference port indices and one or more port indices obtained by adding X to each of the reference port indices. X is an integer greater than or equal to 4. The one or more target port indices indicate one or more ports used for a reference signal. The terminal device determines a plurality of target port indices based on the first information and the second information.

In this application, the first information and the second information indicate the one or more port indices (namely, the one or more target port indices) used for the reference signal. The first information and the second information may indicate a port index before expansion, may indicate a port index after expansion, or may indicate both the port index before expansion and the port index after expansion.

In a possible implementation, the reference port index and the reference port index+X are in a same code division multiplexing CDM group. For any port index a, the port indices a and a+X are in a same CDM group. When both the port indices (for example, the port indices a and a+X) before and after expansion are indicated, such scheduled ports are in one CDM group, so that time-frequency resources occupied by a reference signal (for example, a DMRS) are reduced, or transmit power of the reference signal may be concentrated in one CDM group.

In a possible implementation, when the second information indicates that the port indices in the first set are used as the target port indices, a quantity of the reference port indices is less than or equal to 2. When the quantity of the reference port indices is less than or equal to 2, a quantity of corresponding target port indices is less than or equal to 4. In this way, DMRS ports corresponding to four streams may be all in one CDM group, so that time-frequency resources occupied by a reference signal (for example, a DMRS) are reduced, or transmit power of the reference signal may be concentrated in one CDM group.

In a possible implementation, when the second information indicates that the part of port indices in the first set are used as the target port index, a quantity of the reference port indices is equal to 2. In this way, reference signal (for example, DMRS) ports corresponding to four streams may be all in one CDM group, so that time-frequency resources occupied by a reference signal are reduced, or transmit power of the reference signal may be concentrated in one CDM group.

In a possible implementation, the first information includes row index information in a correspondence relationship, and the correspondence relationship indicates an association relationship between a row index and one or more port indices.

In a possible implementation, in the correspondence relationship, the row index is a first value, and the plurality of port indices include 7, 9, and 19; or in the correspondence relationship, the row index is a second value, and the plurality of port indices include 11, 21, and 23.

In a possible implementation, when the reference port indices indicated by the first information include 0, 1, and 2, the second information indicates that the port indices 0, 1, and 0+X are used as the target port indices, or the port indices 2, 1+X, and 2+X are used as the target port indices; or when the reference port indices indicated by the first information include 0, 1, and 2, the second information indicates that the port indices 0, 1, and 1+X are used as the target port indices, or the port indices 2, 0+X, and 2+X are used as the target port indices. The port indices 0 and 1 are in a same CDM group, and the port index 2 is in another CDM group. In combination with port expansion, the port indices 0, 1, 0+X, and 1+X are in a same CDM group, and the port indices 2 and 2+X are in another CDM group. When the second information indicates that the port indices 0, 1, and 0+X (or the port indices 0, 1, and 1+X) are used as the target port indices, such scheduled ports are in one CDM group, so that time-frequency resources occupied by a DMRS are reduced, or transmit power of the DMRS may be concentrated in one CDM group.

In a possible implementation, the first information includes a row index 20.

In a possible implementation, when the reference port indices indicated by the first information include 3, 4, and 5, the second information indicates that the port indices 4, 5, and 4+X are used as the target port indices, or the port indices 3, 3+X, and 5+X are used as the target port indices; or when the reference port indices indicated by the first information include 3, 4, and 5, the second information indicates that the port indices 4, 5, and 5+X are used as the target port indices, or the port indices 3, 3+X, and 4+X are used as the target port indices. The port indices 4 and 5 are in a same CDM group, and the port index 3 is in another CDM group. In combination with port expansion, the port indices 4, 5, 4+X, and 5+X are in a same CDM group, and the port indices 3 and 3+X are in another CDM group. When the second information indicates that the port indices 4, 5, and 4+X (or the port indices 4, 5, and 5+X) are used as the target port indices, such scheduled ports are in one CDM group, so that time-frequency resources occupied by a reference signal (for example, a DMRS) are reduced, or transmit power of the reference signal may be concentrated in one CDM group.

In a possible implementation, the first information includes a row index 21.

In a possible implementation, X=4, or X=8, or X=6, or X=12.

In a possible implementation, the first information is carried in downlink control information DCI.

In a possible implementation, the second information is carried in downlink control information DCI, or is carried in radio resource control RRC.

In a possible implementation, the terminal device may further receive a third indication from the network device. The third indication indicates that the plurality of target port indices are associated with one codeword. The terminal device is notified, through the third indication, that this solution is applicable to a scenario in which there is one codeword.

According to a third aspect, a reference signal port indication method is provided. The method may be performed by a network device, or may be performed by a component used in the network device, for example, a chip or a processor. An example in which the method is performed by the network device is used below for description. First, the network device determines row index information in a correspondence relationship. Then, the network device sends the row index information in the correspondence relationship to a terminal device. The correspondence relationship indicates an association relationship between a row index and a plurality of port indices. A plurality of port indices associated with the row index information indicate ports used for a reference signal. For example, in the correspondence relationship, the row index is a first value, and the port indices include 7, 9, and 19. For another example, in the correspondence relationship, the row index is a second value, and the port indices include 11, 21, and 23.

More UEs can be scheduled by setting a plurality of correspondence relationships.

In a possible implementation, the reference signal includes a demodulation reference signal DMRS.

In a possible implementation, the correspondence relationship may further include one or more of the following information: a quantity of DMRS CDM groups without data (a quantity of CDM groups for short), a quantity of codewords, a DMRS type, a maximum length (the maximum length indicates a maximum quantity of front-load symbols of a DMRS), and a quantity of front-load symbols.

The correspondence relationship in which the row index is the first value and the port indices include 7, 9, and 19 may further include one or more of the following information: the quantity of CDM groups being 3, the quantity of codewords being 1, the quantity of front-load symbols being 2, the DMRS type being 2, and the maximum length being 2.

The correspondence relationship in which the row index is the second value and the port indices include 11, 21, and 23 may further include one or more of the following information: the quantity of CDM groups being 3, the quantity of codewords being 1, the quantity of front-load symbols being 2, the DMRS type being 2, and the maximum length being 2.

In a possible implementation, the network device may further send a third indication to the terminal device. The third indication indicates that a plurality of target port indices are associated with two codewords. The terminal device is notified, through the third indication, that this solution is applicable to a scenario in which there are two codewords.

According to a fourth aspect, a reference signal port indication method is provided. The method may be performed by a terminal device, or may be performed by a component used in the terminal device, for example, a chip or a processor. An example in which the method is performed by the terminal device is used below for description. The terminal device receives row index information in a correspondence relationship from a network device. Then, the terminal device determines a plurality of port indices (namely, a plurality of target port indices) based on the row index information and the correspondence relationship. The plurality of port indices indicate ports used for a reference signal. For example, in the correspondence relationship, the row index is a first value, and the port indices include 7, 9, and 19. For another example, in the correspondence relationship, the row index is a second value, and the port indices include 11, 21, and 23.

More UEs can be scheduled by setting a plurality of correspondence relationships.

In a possible implementation, the reference signal includes a demodulation reference signal DMRS.

In a possible implementation, the correspondence relationship may further include one or more of the following information: a quantity of DMRS CDM groups without data (a quantity of CDM groups for short), a quantity of codewords, a DMRS type, a maximum length (the maximum length indicates a maximum quantity of front-load symbols of a DMRS), and a quantity of front-load symbols.

The correspondence relationship in which the row index is the first value and the port indices include 7, 9, and 19 may further include one or more of the following information: the quantity of CDM groups being 3, the quantity of codewords being 1, the quantity of front-load symbols being 2, the DMRS type being 2, and the maximum length being 2.

The correspondence relationship in which the row index is the second value and the port indices include 11, 21, and 23 may further include one or more of the following information: the quantity of CDM groups being 3, the quantity of codewords being 1, the quantity of front-load symbols being 2, the DMRS type being 2, and the maximum length being 2.

In a possible implementation, the terminal device may further receive a third indication from the network device. The third indication indicates that the plurality of target port indices are associated with two codewords. The terminal device is notified, through the third indication, that this solution is applicable to a scenario in which there are two codewords.

According to a fifth aspect, a communication apparatus is provided. The apparatus has functions of implementing any one of the foregoing aspects and the possible implementations of the foregoing aspects. The functions may be implemented by hardware, or may be implemented by hardware executing corresponding software. The hardware or software includes one or more functional modules corresponding to the foregoing functions.

According to a sixth aspect, a communication apparatus is provided, includes a processor, and optionally, further includes a memory. The processor is coupled to the memory. The memory is configured to store a computer program or instructions. The processor is configured to execute a part or all of the computer program or instructions in the memory. When the part or all of the computer program or instructions are executed, a function in the method according to any one of the foregoing aspects and the possible implementations of the foregoing aspects is implemented.

In a possible implementation, the apparatus may further include a transceiver. The transceiver is configured to: send a signal processed by the processor, or receive a signal input into the processor. The transceiver may perform a sending action or a receiving action in any one of the aspects and the possible implementations of the aspects.

According to a seventh aspect, this application provides a chip system. The chip system includes one or more processors (which may also be referred to as processing circuits). The processor is electrically coupled to a memory (which may also be referred to as a storage medium). The memory may be located in the chip system, or may not be located in the chip system. The memory is configured to store a computer program or instructions. The processor is configured to execute a part or all of the computer program or instructions in the memory. When the part or all of the computer program or instructions are executed, a function in the method according to any one of the foregoing aspects and the possible implementations of the foregoing aspects is implemented.

In a possible implementation, the chip system may further include an input/output interface (which may also be referred to as a communication interface). The input/output interface is configured to: output a signal processed by the processor, or receive a signal input into the processor. The input/output interface may perform a sending action or a receiving action in any one of the aspects and the possible implementations of the aspects. Specifically, the output interface performs the sending action, and the input interface performs the receiving action.

In a possible implementation, the chip system may include a chip, or may include the chip and another discrete device.

According to an eighth aspect, a computer-readable storage medium is provided, and is configured to store a computer program. The computer program includes instructions for implementing a function in any one of the aspects and the possible implementations of the aspects.

Alternatively, a computer-readable storage medium is provided, and is configured to store a computer program. When the computer program is executed by a computer, the computer may be enabled to perform the method according to any one of the foregoing aspects and the possible implementations of the foregoing aspects.

According to a ninth aspect, a computer program product is provided. The computer program product includes computer program code. When the computer program code is run on a computer, the computer is enabled to perform the method according to any one of the foregoing aspects and the possible implementations of the foregoing aspects.

According to a tenth aspect, a communication system is provided. The communication system includes a network device that performs the method according to any one of the first aspect and the possible implementations of the first aspect and a terminal device that performs the method according to any one of the second aspect and the possible implementations of the second aspect, or includes a network device that performs the method according to any one of the third aspect and the possible implementations of the third aspect and a terminal device that performs the method according to any one of the fourth aspect and the possible implementations of the fourth aspect.

For technical effects of the fifth aspect to the tenth aspect, refer to the descriptions of the first aspect to the fourth aspect. Details are not described again.

### BRIEF DESCRIPTION OF DRAWINGS

FIG. 1 is a diagram of a structure of a communication system according to an embodiment of this application;
FIG. 2a shows a time-frequency resource position of a double-symbol DMRS of type 1;
FIG. 2b shows a time-frequency resource position of a double-symbol DMRS of type 2;
FIG. 3 is a schematic flowchart of a communication method according to an embodiment of this application;
FIG. 4 is a schematic flowchart of a communication method according to an embodiment of this application;
FIG. 5 is a diagram of a structure of a communication apparatus according to an embodiment of this application; and
FIG. 6 is a diagram of a structure of a communication apparatus according to an embodiment of this application.

### DESCRIPTION OF EMBODIMENTS

For ease of understanding embodiments of this application, the following describes some terms in embodiments of this application, to help persons skilled in the art have a better understanding.

Technical solutions in embodiments of this application may be applied to various communication systems such as a satellite communication system and a conventional mobile communication system. The satellite communication system may be integrated with the conventional mobile communication system (namely, a terrestrial communication system). The communication system is, for example, a wireless local area network (wireless local area network, WLAN) communication system, a wireless fidelity (wireless fidelity, Wi-Fi) system, a long term evolution (long term evolution, LTE) system, an LTE frequency division duplex (frequency division duplex, FDD) system, an LTE time division duplex (time division duplex, TDD) system, a 5th generation (5th generation, 5G) system or a new radio (new radio, NR) system, a 6th generation (6th generation, 6G) system, or another future communication system. The communication system further supports a communication system integrating a plurality of wireless technologies, for example, may be further used in a system that integrates a non-terrestrial network (non-terrestrial network, NTN) and a terrestrial mobile communication network, for example, an uncrewed aerial vehicle, a satellite communication system, or high altitude platform station (high altitude platform station, HAPS) communication.

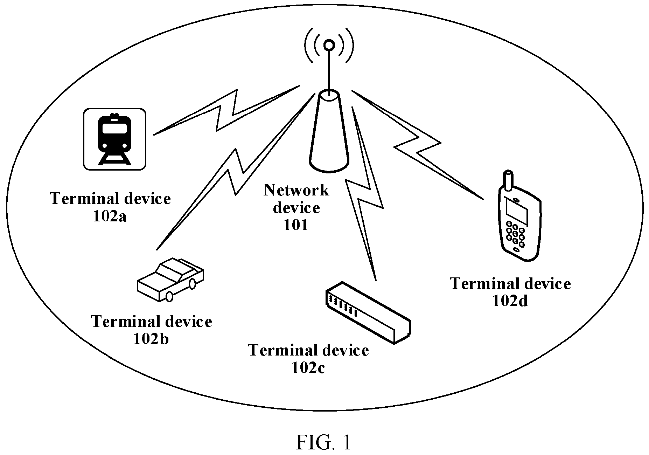

FIG. 1 shows a communication system used in an embodiment of this application, including a network device 101 and four terminal devices (102a to 102d). The network device 101 is configured to: receive uplink signals from the terminal devices (102a to 102d), or send a downlink signal to the terminal devices. The terminal devices (102a to 102d) are configured to: send the uplink signals to the network device, or receive the downlink signal from the network device. For example, the network device 101 may send downlink data and a DMRS to the terminal devices (102a to 102d). Any one of the terminal devices (102a to 102d) may perform downlink channel estimation based on a received DMRS, and send a DMRS and uplink data to the network device 101. The network device may perform uplink channel estimation based on a received DMRS.

FIG. 1 is merely an example. A type of the communication system, a quantity and a type of devices included in the communication system, and the like are not limited. For example, another communication system used in embodiments of this application may include one network device and one terminal device, or include a plurality of network devices and one terminal device. The plurality of network devices may simultaneously serve the terminal device.

The terminal device in embodiments of this application may also be referred to as a user equipment (user equipment, UE), a mobile station (mobile station, MS), a mobile terminal (mobile terminal, MT), or the like, and is a device that provides voice or data connectivity for a user, or may be an internet of things device. For example, the terminal device includes a handheld device, a vehicle-mounted device, or the like that has a wireless connection function. The terminal device may be a mobile phone (mobile phone), a tablet computer, a notebook computer, a palmtop computer, a mobile internet device (mobile internet device, MID), a wearable device (for example, a smartwatch, a smart band, or a pedometer), a vehicle-mounted device (for example, a motor vehicle, a bicycle, an electric vehicle, an aircraft, a ship, a train, or a high-speed train), a virtual reality (virtual reality, VR) device, an augmented reality (augmented reality, AR) device, a wireless terminal in industrial control (industrial control), a smart home device (for example, a refrigerator, a television, an air conditioner, or an electricity meter), an intelligent robot, a workshop device, a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a flight device (for example, an intelligent robot, a hot balloon, an uncrewed aerial vehicle, or an aircraft), or the like. In embodiments of this application, devices implementing the foregoing functions are uniformly described by using the terminal device as an example.

The network device in embodiments of this application is a device that is in a network and that is configured to connect the terminal device to a wireless network. The network device may be a node in a radio access network, and may also be referred to as a base station, or may be referred to as a radio access network (radio access network, RAN) node (or device). The network device may be configured to perform mutual conversion between a received over-the-air frame and an internet protocol (IP) packet, to serve as a router between the terminal device and the rest of the access network. The rest of the access network may include an IP network. The network device may further coordinate attribute management of an air interface. For example, the network device may include an evolved NodeB (NodeB or eNB or e-NodeB, evolved NodeB) in a long term evolution (long term evolution, LTE) system or an LTE-advanced (LTE-Advanced, LTE-A) system, or may include a next generation NodeB (next generation NodeB, gNB) in a 5th generation (5th generation, 5G) mobile communication system or a new radio (new radio, NR) system, or may include a transmission reception point (transmission reception point, TRP), a home base station (for example, a home evolved NodeB or a home NodeB, HNB), a baseband unit (baseband unit, BBU), a Wi-Fi access point (access point, AP), or the like, or may include a central unit (central unit, CU) and a distributed unit (distributed unit, DU) in a cloud access network (cloud radio access network, CloudRAN) system. This is not limited in embodiments of this application.

To better understand the solutions in embodiments of this application, the following describes technical terms in embodiments of this application.
(1) Code division multiplexing (code division multiplexing, CDM): A group of code groups including a plurality of codewords that are orthogonal to each other are used to carry a plurality of signals. A plurality of users may perform communication over a same frequency band at the same time. The users use different codewords, and the users do not interfere with each other.
(2) Frequency division multiplexing (frequency division multiplexing, FDM): A total bandwidth used for transmission of a channel is divided into several subbands (or referred to as subchannels), and one signal is transmitted over each subchannel. The users may perform communication over different frequency bands at the same time. The users do not interfere with each other.
(3) Time division multiplexing (time division multiplexing, TDM): Time provided for information transmission on an entire channel is divided into several time slices (slots for short), and the slots are allocated to each signal source for use. Each signal exclusively occupies the channel in the slot of the signal for data transmission. The plurality of users may perform communication over a same frequency band at different time. The users do not interfere with each other.
(4) Orthogonal cover code (orthogonal cover code, OCC): That different OCC codes are orthogonal means that an inner product of any two of the OCC codes is equal to 0. A same DMRS sequence is multiplied by different OCCs to obtain new sequences, so that the new sequences can be orthogonal, thereby implementing multiplexing of a plurality of DMRS ports on a same time-frequency domain resource.
(5) Terms "system" and "network" may be used interchangeably in embodiments of this application. "A plurality of" means two or more. In view of this, "a plurality of" may also be understood as "at least two" in embodiments of this application. "At least one" may be understood as one or more, for example, one, two, or more. For example, "include at least one" means "include one, two, or more", and there is no limitation on which is included. For example, "include at least one of A, B, and C" may mean "include A, B, or C", "include A and B, A and C, or B and C", or "include A, B, and C". The term "and/or" describes an association relationship for describing associated objects and represents that three relationships may exist. For example, A and/or B may represent the following three cases: Only A exists, both A and B exist, and only B exists. In addition, the character "/" usually indicates an "or" relationship between the associated objects. In addition, unless otherwise specified, ordinal numbers such as "first" and "second" in embodiments of this application are used to distinguish between a plurality of objects, and are not intended to limit a sequence, a time sequence, priorities, or importance of the plurality of objects.

For ease of understanding embodiments of this application, the following describes an application scenario of this application. A network architecture and a service scenario described in embodiments of this application are intended to describe the technical solutions in embodiments of this application more clearly, and do not constitute any limitation on the technical solutions provided in embodiments of this application. Persons of ordinary skill in the art may know that, as a new service scenario emerges, the technical solutions provided in embodiments of this application are also applicable to a similar technical problem.

To better estimate an equivalent channel and demodulate data, a plurality of DMRS ports corresponding to a plurality of layers of data are orthogonal. Based on maximum quantities of orthogonal ports supported by DMRSs, the DMRSs may be classified into two types: a type 1 (type 1) and a type 2 (type 2). Based on quantities of orthogonal frequency division multiplexing (orthogonal frequency division multiplexing, OFDM) symbols occupied by DMRSs, the DMRSs may be classified into two types: a single symbol and double symbols.

The type 1 has the following features:
(1) The single symbol supports a maximum of four DMRS ports, and the double symbols support a maximum of eight DMRS ports.
(2) Two CDM groups are included.
(3) Each DMRS port occupies six resource elements (resource elements, REs) in each resource block (resource block, RB).

The type 2 has the following features:
(1) The single symbol supports a maximum of six DMRS ports, and the double symbols support a maximum of 12 DMRS ports.
(2) Three CDM groups are included.
(3) Each DMRS port occupies four REs in each RB.

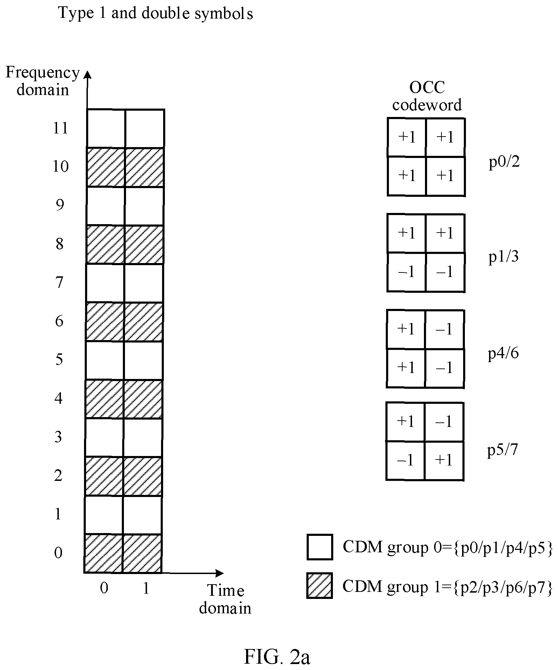

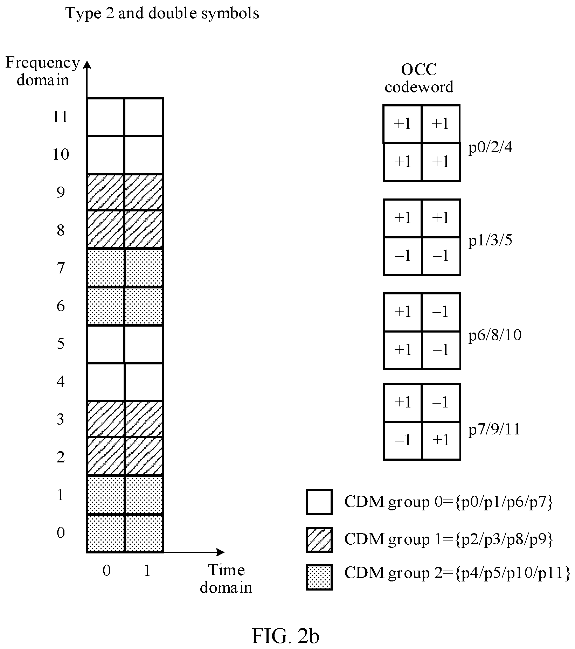

FIG. 2a shows an example of a time-frequency resource position (namely, a DMRS pilot pattern) of a double-symbol DMRS of type 1. FIG. 2b shows an example of a time-frequency resource position (namely, a DMRS pilot pattern) of a double-symbol DMRS of type 2. An x-axis represents time domain, and may be specifically a quantity of symbols. A y-axis represents frequency domain, and may be specifically a quantity of REs (one RB includes 12 REs). It can be learned from FIG. 2a and FIG. 2b that DMRS ports in different CDM groups occupy different REs, and orthogonality is implemented by using frequency division multiplexing FDM; and DMRS ports in a same CDM group occupy a same RE, and orthogonality is implemented by using code division multiplexing CDM of orthogonal cover codes OCCs.

The type 1 in FIG. 2a is used as an example. A CDM group 0 includes four DMRS ports whose indices are 0, 1, 4, and 5, and occupies REs corresponding to "blank grids" in each RB. A CDM group 1 includes four DMRS ports whose indices are 2, 3, 6, and 7, and occupies REs corresponding to "stripe grids" in each RB. REs corresponding to "blank grids" in one RB may be divided into three groups: REs whose indices are 11 and 9 are in one group, REs whose indices are 7 and 5 are in one group, and REs whose indices are 3 and 1 are in one group. With reference to time domain, each group includes four REs (two REs in frequency domain+two REs in time domain). For REs corresponding to four "blank grids" in each group, four orthogonal DMRS ports are enabled by using an OCC4 including an FD-OCC2 and a TD-OCC2, and OCC codes of each DMRS port on the four REs are shown in FIG. 2a. Each orthogonal DMRS port may be allocated to each layer of data, to estimate an equivalent channel of the layer of data on the four REs. Similarly, REs corresponding to "stripe grids" in one RB may be divided into three groups, and the OCC4 on the REs corresponding to the "blank grids" is multiplexed on the REs corresponding to the three groups of "stripe grids", to obtain channel estimation of the four orthogonal DMRS ports at different frequency domain positions. That is, for each RB, channel estimation at three frequency domain positions may be obtained, and interpolation and filtering are performed to estimate channels on other REs, to estimate channels on all REs on the RB. Then, the estimated channels are used for data demodulation.

For uplink DMRS transmission, the network device indicates a DMRS port to the terminal device, and the terminal device sends a DMRS to the network device through the corresponding DMRS port. For downlink DMRS transmission, the network device also indicates a DMRS port to the terminal device, and the terminal device receives a DMRS from the network device through the corresponding DMRS port.

For example, the network device may send indication information of a DMRS port index to the terminal device through downlink control information (downlink control information, DCI). The indication information of the DMRS port index may be row index information in a correspondence relationship, and the correspondence relationship indicates an association relationship between a row index and one or more DMRS port indices. Further, the correspondence relationship includes a quantity of CDM groups, and the correspondence relationship specifically indicates an association relationship among the row index, the one or more DMRS port indices, and the quantity of CDM groups. Further, the correspondence relationship includes a quantity of codewords, and the correspondence relationship specifically indicates an association relationship among the row index, the one or more DMRS port indices, the quantity of CDM groups, and the quantity of codewords. Both the network device and the terminal device maintain these correspondence relationships. In this way, after receiving the row index information, the terminal device may determine corresponding DMRS port index (indices) based on the correspondence relationships and the row index information.

The correspondence relationship may be represented in a form of a table. The following Table 1 and Table 2 are each a table of a correspondence relationship between the row index and the DMRS port index (the port index may also be referred to as a port number) in a current 5G standard.

**Table 1: Table of the correspondence relationship between the row index and the DMRS port index (indices) (Antenna port(s) (1000+DMRS port), dmrs-Type=1, and maxLength=1)**

| Two codewords: Codeword 0 enabled and codeword 1 disabled (One Codeword: Codeword 0 enabled, Codeword 1 disabled) | | |
|---|---|---|
| Row index (Value) | Number of DMRS CDM groups without data (Number of DMRS CDM group(s) without data) | DMRS port index (indices) (DMRS port(s)) |
| 0 | 1 | 0 |
| 1 | 1 | 1 |
| 2 | 1 | 0 and 1 |
| 3 | 2 | 0 |
| 4 | 2 | 1 |
| 5 | 2 | 2 |
| 6 | 2 | 3 |
| 7 | 2 | 0 and 1 |
| 8 | 2 | 2 and 3 |
| 9 | 2 | 0 to 2 |
| 10 | 2 | 0 to 3 |
| 11 | 2 | 0 and 2 |
| 12 to 15 | Reserved (Reserved) | Reserved (Reserved) |

**Table 2: Table of the correspondence relationship between the row index and the DMRS port index (indices) (Antenna port(s) (1000+DMRS port), dmrs-Type=1, and maxLength=2)**

| Two codewords: Codeword 0 enabled and codeword 1 disabled (One Codeword: Codeword 0 enabled, Codeword 1 disabled) | | | |
|---|---|---|---|
| Row index (Value) | Number of DMRS CDM groups without data (Number of DMRS CDM group(s) without data) | DMRS port index (indices) (DMRS port(s)) | Number of front-load symbols (Number of front-load symbols) |
| 0 | 1 | 0 | 1 |
| 1 | 1 | 1 | 1 |
| 2 | 1 | 0 and 1 | 1 |
| 3 | 2 | 0 | 1 |
| 4 | 2 | 1 | 1 |
| 5 | 2 | 2 | 1 |
| 6 | 2 | 3 | 1 |
| 7 | 2 | 0 and 1 | 1 |
| 8 | 2 | 2 and 3 | 1 |
| 9 | 2 | 0 to 2 | 1 |
| 10 | 2 | 0 to 3 | 1 |
| 11 | 2 | 0 and 2 | 1 |
| 12 | 2 | 0 | 2 |
| 13 | 2 | 1 | 2 |
| 14 | 2 | 2 | 2 |
| 15 | 2 | 3 | 2 |
| 16 | 2 | 4 | 2 |
| 17 | 2 | 5 | 2 |
| 18 | 2 | 6 | 2 |
| 19 | 2 | 7 | 2 |
| 20 | 2 | 0 and 1 | 2 |
| 21 | 2 | 2 and 3 | 2 |
| 22 | 2 | 4 and 5 | 2 |
| 23 | 2 | 6 and 7 | 2 |
| 24 | 2 | 0 and 4 | 2 |
| 25 | 2 | 2 and 6 | 2 |
| 26 | 2 | 0, 1, and 4 | 2 |
| 27 | 2 | 2, 3, and 6 | 2 |
| 28 | 2 | 0, 1, 4, and 5 | 2 |
| 29 | 2 | 2, 3, 6, and 7 | 2 |
| 30 | 2 | 0, 2, 4, and 6 | 2 |
| 31 | Reserved (Reserved) | Reserved (Reserved) | Reserved (Reserved) |

The current 5G standard further includes another table of a correspondence relationship between a row index and a DMRS port index (indices) in addition to Table 1 and Table 2, for example, a table of a correspondence relationship between a row index and a DMRS port index under a condition of Antenna port(s) (1000+DMRS port), dmrs-Type=2, and maxLength=1, for example, a table of a correspondence relationship between a row index and a DMRS port index under a condition of Antenna port(s) (1000+DMRS port), dmrs-Type=2, and maxLength=2. For details, refer to Table 7.3.1.2.2-1, Table 7.3.1.2.2-1A, Table 7.3.1.2.2-2, Table 7.3.1.2.2-2A, Table 7.3.1.2.2-3, Table 7.3.1.2.2-3A, Table 7.3.1.2.2-4, and Table 7.3.1.2.2-4A in TS 38.212 v16.7.0 of Release 16 (Release 16, R16). Details are not described.

With massive growth of 5G devices and development of high-data-rate services, an increase in a quantity of transport layers is becoming a mainstream direction of MIMO evolution. In addition, a developing advanced signal processing technology may also enable data transmission of more layers. Therefore, more orthogonal DMRS ports are needed. Based on this, a DMRS port extension solution is proposed. For example, a quantity of CDM groups remains unchanged, and more DMRS orthogonal ports are multiplexed in each CDM group. A possible DMRS port extension result is as follows: A single-symbol DMRS of type 1 support a maximum of eight DMRS ports; double-symbol DMRS of type 1 support a maximum of 16 DMRS ports; a single-symbol DMRS of type 2 support a maximum of 12 DMRS ports; and double-symbol DMRS of type 2 support a maximum of 24 DMRS ports. This application provides a solution in which the network device indicates, to the terminal device after DMRS port extension, port(s) used for a reference signal.

The following describes the solution in detail with reference to the accompanying drawings. Features or content marked by dashed lines in the accompanying drawings may be understood as optional operations or optional structures in embodiments of this application. For details of the embodiments/examples of this application, refer to each other.

It should be noted that the port index in this application may also be referred to as a port number.

### Embodiment 1:

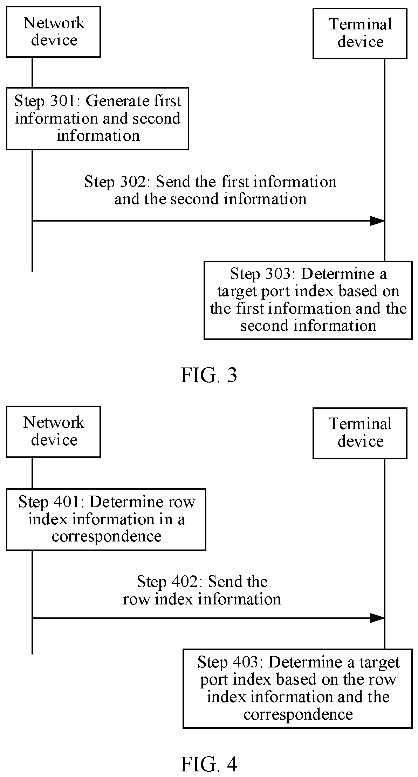

FIG. 3 shows an example of a schematic flowchart of a communication method according to an embodiment of this application. A terminal device in FIG. 3 may be a terminal device in FIG. 1, or a unit, a module, or a chip in the terminal device. A network device in FIG. 3 may be the network device in FIG. 1, or a unit, a module, or a chip in the network device.

The method includes the following steps.

Step 301: The network device generates first information and second information.

For uplink reference signal transmission, the network device indicates port index (indices) to the terminal device, and the terminal device sends a reference signal to the network device through port(s) corresponding to the index (indices). For downlink reference signal transmission, the network device also indicates port index (indices) to the terminal device, and the terminal device receives a reference signal from the network device through port(s) corresponding to the index (indices). For ease of differentiation, port index (indices) that need(s) to be indicated by the network device to the terminal device is referred to as target port index (indices), and there may be one or more target port indices. The target port index (indices) indicates port(s) used for a reference signal.

The network device determines the first information and the second information based on the target port index (indices). The first information and the second information jointly indicate the target port index (indices).

For example, if the reference signal is a DMRS, the port is a DMRS port. That the reference signal is used to estimate a status of a channel between the network device and the terminal device may be understood as that the reference signal is a demodulation reference signal of the channel between the network device and the terminal device. This example may be applied to downlink DMRS transmission. For the downlink DMRS transmission, the channel between the network device and the terminal device is used to carry downlink data. Specifically, the DMRS for downlink transmission is used to perform channel estimation on a physical downlink shared channel (physical downlink shared channel, PDSCH). It should be noted that, in addition to the DMRS, if the reference signal may be a channel state information-reference signal (channel state information-reference signal, CSI-RS), the port is a CSI-RS port; or if the reference signal may be a synchronization signal and physical broadcast channel (physical broadcast channel, PBCH) block (synchronization signal and PBCH block, SSB), the port is an SSB port. This is not limited in this application.

The first information indicates one or more reference port indices. The reference port index (indices) indicated by the first information may be port index (indices) before port expansion. The port index (indices) before expansion may be understood as DMRS port index (indices) included in each CDM group in an existing standard, or DMRS port index (indices) supported by different quantities of symbols and different types in the existing standard. For example, when a single-symbol DMRS of type 1 support a maximum of four DMRS ports, the one or more of reference port indices indicated by the first information are one or more of 0 to 3. For example, when double-symbol DMRS of type 1 support a maximum of eight DMRS ports, the one or more of reference port indices indicated by the first information are one or more of 0 to 7. For example, when a single-symbol DMRS of type 2 support a maximum of six DMRS ports, the one or more of reference port indices indicated by the first information are one or more of 0 to 5. For example, when double-symbol DMRS of type 2 support a maximum of 12 DMRS ports, the one or more of reference port indices indicated by the first information are one or more of 0 to 11.

The first information may include row index information in a correspondence relationship, and the correspondence relationship indicates an association relationship between a row index and one or more port indices. The correspondence relationship may be a correspondence relationship in a table, and the table may be any one of Table 1, Table 2, and Table 7.3.1.2.2-1 to Table 7.3.1.2.2-4A specified in TS 38.212 v16.7.0 of the protocol R16. In other words, the first information includes row index information in any one of Table 1, Table 2, and Table 7.3.1.2.2-1 to Table 7.3.1.2.2-4A in the protocol 38.212 of R16. The reference port index (indices) indicated by the first information may be a port index included in a row in Table 1, Table 2, and Table 7.3.1.2.2-1 to Table 7.3.1.2.2-4A in TS 38.212 v16.7.0 of the protocol R16.

The target port index may be determined in a plurality of manners.

In a possible manner, the one or more reference port indices are used as target port index (indices).

In another possible manner, each of the one or more reference port indices plus X is used as target port index (indices).

In still another possible manner, the one or more reference port indices and a port index obtained by adding X to each of the reference port indices are used as target port indices.

In yet another possible manner, a part of port indices in a first set (that is, a plurality of reference port indices and port indices obtained by adding X to each of the reference port indices) are used as target port index (indices).

For example, X is an increment of a maximum quantity of supported DMRS ports after expansion compared with a maximum quantity of supported DMRS ports before expansion. With massive growth of 5G devices and development of high-data-rate services, an increase in a quantity of transport layers is becoming a mainstream direction of MIMO evolution. In addition, a developing advanced signal processing technology may also enable data transmission of more layers. Therefore, more orthogonal ports (for example, DMRS ports) are needed. Therefore, port expansion is proposed. The port expansion may be understood as that more orthogonal DMRS ports are multiplexed in each CDM group compared with an existing standard, or may be understood as that a single symbol, double symbols, a type 1, and a type 2 support more DMRS ports compared with an existing standard.

Optionally, X is an integer greater than or equal to 4. For example, X=4, or X=8, or X=6, or X=12. For example, before expansion, the single-symbol DMRS of type 1 support a maximum of four DMRS ports. If the single-symbol DMRS of type 1 support a maximum of eight DMRS ports after expansion, X=4. Considering compatibility with double-symbol ports of a terminal user that does not support port expansion, a value of X may alternatively be 8. For example, before expansion, the double-symbol DMRS of type 1 support a maximum of eight DMRS ports. If the double-symbol DMRS of type 1 support a maximum of 16 DMRS ports after expansion, X=8. For example, before expansion, the single-symbol DMRS of type 2 support a maximum of six DMRS ports. If the single-symbol DMRS of type 2 support a maximum of 12 DMRS ports after expansion, X=6. Considering compatibility with double-symbol ports of a terminal user that does not support port expansion, a value of X may alternatively be 12. For example, before expansion, the double-symbol DMRS of type 2 support a maximum of 12 DMRS ports. If the double-symbol DMRS of type 2 support a maximum of 24 DMRS ports after expansion, X=12.

Based on this, the second information may indicate the following plurality of cases.

In an example, the second information indicates that the one or more reference port indices indicated by the first information are used as target port index (indices). For example, the first information indicates reference port indices a and b, and the second information indicates that the port indices a and b are used as target port indices.

In an example, the second information indicates that each of the one or more reference port indices indicated by the first information plus X is used as target port index (indices). For example, the first information indicates reference port indices a and b, and the second information indicates that port indices a+X and b+X are used as target port indices.

In an example, the second information indicates that the one or more reference port indices indicated by the first information and each of the reference port indices plus X are used as target port indices. For example, the first information indicates reference port indices a and b, and the second information indicates that port indices, a, b, a+X, and b+X are used as target port indices. Optionally, when the second information indicates that the one or more reference port indices and each of the reference port indices plus X are used as target port indices, a quantity of the reference port indices is less than or equal to 2. One codeword supports a maximum of four streams, and each stream corresponds to one port index. In this case, one codeword corresponds to a maximum of four port indices. When the quantity of the reference port indices is less than or equal to 2, the reference port indices and each of the reference port indices plus X are used as the target port indices. In this case, a quantity of determined target port indices is less than or equal to 4. In this way, DMRS ports corresponding to the four streams may be all in one CDM group, so that time-frequency resources occupied by a DMRS are reduced, or transmit power of the DMRS may be concentrated in one CDM group.

In an example, the second information indicates that a part of port indices in a first set are used as target port index (indices), and the first set includes the one or more reference port indices indicated by the first information and the port index obtained by adding X to each of the reference port indices. For example, the first information indicates reference port indices a and b, and the second information indicates that a part of port indices, a, b, a+X, and b+X are used as target port index (indices). Optionally, when the second information indicates that the part of port indices in the first set are used as the target port index (indices), a quantity of the reference port indices is equal to 2. In this way, DMRS ports of fewer than four streams may be all in one CDM group, so that time-frequency resources occupied by a DMRS are reduced, or transmit power of the DMRS may be concentrated in one CDM group. For example, the target port indices may include three port indices (for example, a, b, and a+X, or a, b, and b+X, or a, a+X, and b+X, or b, a+X, and b+X) in the first set (four port indices, for example, the port indices a, b, a+X, and b+X). In this way, DMRS ports corresponding to three streams may be all in one CDM group, so that time-frequency resources occupied by a DMRS are reduced, or transmit power of the DMRS may be concentrated in one CDM group.

The second information occupies 2 bits or even more bits. Meanings represented by specific values of a plurality of bits occupied by the second information may be specified in advance. A specific example in which the second information occupies 2 bits is described:
When the 2 bits are 00, it indicates that the one or more reference port indices indicated by the first information are used as target port index (indices).
When the 2 bits are 01, it indicates that each of the one or more reference port indices indicated by the first information plus X is used as target port index (indices).
When the 2 bits are 10, it indicates that the one or more reference port indices indicated by the first information and each of the reference port indices plus X are used as target port indices.
When the 2 bits are 11, it indicates that a part of the port indices in the first set are used as target port index (indices), and the first set includes the one or more reference port indices indicated by the first information and the port indices obtained by adding X to each of the reference port indices.

Content represented by the values 00, 01, 10, and 11 of the 2 bits is merely an example, and should not constitute a limitation on an indication manner. In another example, for example, 00 indicates that each of the one or more reference port indices indicated by the first information plus X is used as target port index (indices), and 01 indicates that both the one or more reference port indices indicated by the first information and each of the reference port indices plus X are used as target port indices.

The first information and the second information may be carried in one message, or may be carried in a plurality of messages. The first information may be carried in downlink control information DCI. The second information may be carried in downlink control information DCI, a higher layer indication, or RRC.

Step 302: The network device sends the first information and the second information to the terminal device. Correspondingly, the terminal device receives the first information and the second information from the network device.

Step 303: The terminal device determines target port index (indices) based on the first information and the second information.

Further, the network device may send a reference signal (for example, a DMRS) through port(s) corresponding to the target port index (indices). Correspondingly, the terminal device may receive the reference signal (for example, the DMRS) from the network device through the port(s) corresponding to the target port index (indices). The network device may perform channel estimation based on the reference signal, and send data to the terminal device.

In this application, the first information and the second information indicate the port index (indices) (namely, the target port index (indices)) used for the reference signal. The first information and the second information may indicate a port index before expansion, may indicate a port index after expansion, or may indicate both the port index before expansion and the port index after expansion.

In a possible implementation, the reference port index (indices) and the reference port index (indices)+X are in a same code division multiplexing CDM group. For any port index a, port indices a and a+X are in a same CDM group. When both port indices (for example, the port index a and a+X) before and after expansion are indicated, such scheduled ports are in one CDM group, so that time-frequency resources occupied by a DMRS are reduced, or transmit power of the DMRS may be concentrated in one CDM group.

In an optional example, a communication procedure described in this embodiment is applicable to a scenario in which there is one codeword. For example, the network device may further send a third indication to the terminal device. Correspondingly, the terminal device may receive the third indication from the network device. The third indication indicates that a plurality of target port indices are associated with one codeword. One codeword may usually carry a maximum of four streams, and each stream corresponds to one DMRS port. In this case, in a scenario of one codeword, there are a maximum of four target port indices. The third indication may be carried in downlink control information DCI.

In the case of one codeword, a maximum of four DMRS ports can be scheduled. When there are three or more reference port indices, a total quantity of the plurality of reference port indices and a port index obtained by adding X to each of the reference port indices is greater than 4. In one codeword, when there are three or four reference port indices, a plurality of reference port indices are allowed to be used as target port indices, or each of the plurality of reference port indices plus X is allowed to be used as a target port index, or a part of the port indices in the first set (that is, the plurality of reference port indices and port indices obtained by adding X to each of the reference port indices) are allowed to be used as target port index (indices). A case in which a part of the port indices in the first set are allowed to be used as target port index (indices) may be further specifically classified into two cases: port index (indices) (whose quantity is less than 4) in a same CDM group are allowed to be used as target port indices; and port indices (whose quantity is less than 4) in different CDM groups are allowed to be used as target port indices. It should be noted that, it is not allowed to use both a plurality of reference port indices and a port index obtained by adding X to each of the reference port indices as target port indices.

A specific example is described by using an example in which the reference port indices include 0, 1, and 2.

The following four cases may be specified in advance in this application:
The port indices 0, 1, and 2 are allowed to be used as the target port indices.
The port indices 0+X, 1+X, and 2+X are allowed to be used as the target port indices.
The port indices 0, 1, and 0+X, or the port indices 0, 1, and 1+X are allowed to be used as the target port indices.
The port indices 2, 1+X, and 2+X, or the port indices 2, 0+X, and 2+X are allowed to be used as the target port indices.

Based on the foregoing stipulation, when the reference port indices indicated by the first information include 0, 1, and 2, the second information may indicate the following several cases:
The second information may indicate that the port indices 0, 1, and 2 are used as the target port indices.

Alternatively, the second information may indicate that the port indices 0+X, 1+X, and 2+X are used as the target port indices.

Alternatively, the second information may indicate that the port indices 0, 1, and 0+X (or the port indices 0, 1, and 1+X) are used as the target port indices.

Alternatively, the second information may indicate that the port indices 2, 1+X, and 2+X (or the port indices 2, 0+X, and 2+X) are used as the target port indices.

With reference to the examples shown in FIG. 2a and FIG. 2b, the port indices 0 and 1 are in a same CDM group, and the port index 2 is in another CDM group. In combination with port expansion, the port indices 0, 1, 0+X, and 1+X are in a same CDM group, and the port indices 2 and 2+X are in another CDM group. When the second information indicates that the port indices 0, 1, and 0+X (or the port indices 0, 1, and 1+X) are used as the target port indices, such scheduled ports are in one CDM group, so that time-frequency resources occupied by a DMRS are reduced, or transmit power of the DMRS may be concentrated in one CDM group.

Meanings represented by specific values of a plurality of bits occupied by the second information may be specified in advance. A specific example is described by using an example in which the first information indicates reference port indices 0, 1, and 2, and the second information occupies 2 bits:
When the 2 bits are 00, it indicates that the port indices 0, 1, and 2 are used as the target port indices.
When the 2 bits are 01, it indicates that the port indices 0+X, 1+X, and 2+X are used as the target port indices.
When the 2 bits are 10, it indicates that the port indices 0, 1, and 0+X (or the port indices 0, 1, and 1+X) are used as the target port indices.
When the 2 bits are 11, it indicates that the port indices 2, 1+X, and 2+X (or the port indices 2, 0+X, and 2+X) are used as the target port indices.

Content represented by the values 00, 01, 10, and 11 of the 2 bits is merely an example, and should not constitute a limitation on an indication manner. In another example, for example, when the 2 bits are 10, it indicates that the port indices 2, 1+X, and 2+X (or the port indices 2, 0+X, and 2+X) are used as the target port indices; and when 2 bits are 11, it indicates that the port indices 0, 1, and 0+X (or the port indices 0, 1, and 1+X) are used as the target port indices.

In an example, the first information includes a row index 20. In a table of a correspondence relationship between a row index and DMRS port (indices) index under a condition of Antenna port(s) (1000+DMRS port), dmrs-Type=2, and maxLength=1 and a table of a correspondence relationship between a row index and DMRS port index (indices) under a condition of Antenna port(s) (1000+DMRS port), dmrs-Type=2, and maxLength=2, in a row whose row index (Value) is 20, DMRS port indices include 0 to 2.

An example is described by using an example in which the reference port indices include 3, 4, and 5.

The following four cases may be specified in advance in this application:
The port indices 3, 4, and 5 are allowed to be used as the target port indices.
The port indices 3+X, 4+X, and 5+X are allowed to be used as the target port indices.
The port indices 4, 5, and 4+X, or the port indices 4, 5, and 5+X are allowed to be used as the target port indices.
The port indices 3, 3+X, and 5+X, or the port indices 3, 3+X, and 4+X are allowed to be used as the target port indices.

Based on the foregoing stipulation, when the reference port indices indicated by the first information include 3, 4, and 5, the second information may indicate the following several cases:
The second information may indicate that the port indices 3, 4, and 5 are used as the target port indices.

Alternatively, the second information may indicate that the port indices 3+X, 4+X, and 5+X are used as the target port indices.

Alternatively, the second information may indicate that the port indices 3, 3+X, and 5+X (or the port indices 3, 3+X, and 4+X) are used as the target port indices.

Alternatively, the second information may indicate that the port indices 4, 5, and 4+X (or the port indices 4, 5, and 5+X) are used as the target port indices.

With reference to the examples shown in FIG. 2a and FIG. 2b, the port indices 4 and 5 are in a same CDM group, but the port index 3 is in another CDM group. In combination with port expansion, the port indices 4, 5, 4+X, and 5+X are in a same CDM group, and the port indices 3 and 3+X are in another CDM group. When the second information indicates that the port indices 4, 5, and 4+X (or the port indices 4, 5, and 5+X) are used as the target port indices, such scheduled ports are in one CDM group, so that time-frequency resources occupied by a DMRS are reduced, or transmit power of the DMRS may be concentrated in one CDM group.

Meanings represented by specific values of a plurality of bits occupied by the second information may be specified in advance. A specific example is described by using an example in which the first information indicates reference port indices 3, 4, and 5, and the second information occupies 2 bits:
When the 2 bits are 00, it indicates that the port indices 3, 4, and 5 are used as the target port indices.
When the 2 bits are 01, it indicates that the port indices 3+X, 4+X, and 5+X are used as the target port indices.
When the 2 bits are 10, it indicates that the port indices 4, 5, and 4+X (or the port indices 4, 5, and 5+X) are used as the target port indices.
When the 2 bits are 11, it indicates that the port indices 3, 3+X, and 5+X (or the port indices 3, 3+X, and 4+X) are used as the target port indices.

Content represented by the values 00, 01, 10, and 11 of the 2 bits is merely an example, and should not constitute a limitation on an indication manner. In another example, for example, when the 2 bits are 10, it indicates that the port indices 3, 3+X, and 5+X (or the port indices 3, 3+X, and 4+X) are used as the target port indices; and when 2 bits are 11, it indicates that the port indices 4, 5, and 4+X (or the port indices 4, 5, and 5+X) are used as the target port indices.

In a specific example, the first information includes a row index 21. In a table of a correspondence relationship between a row index and DMRS port index (indices) under a condition of Antenna port(s) (1000+DMRS port), dmrs-Type=2, and maxLength=1 and a table of a correspondence relationship between a row index and DMRS port index (indices) under a condition of Antenna port(s) (1000+DMRS port), dmrs-Type=2, and maxLength=2, in a row whose row index (Value) is 21, DMRS port indices include 3 to 5.

In the table of the correspondence relationship between the row index and the DMRS port index (indices) in the condition of Antenna port(s) (1000+DMRS port), dmrs-Type=2, and maxLength=2 specified in a current 5G standard, port indices associated with a row index 42 include 0, 1, and 6, port indices associated with arrow index 43 include 2, 3, and 8, and port indices associated with a row index 44 include 4, 5, and 10. With reference to FIG. 2b, the port indices 0, 1, and 6 are in a same CDM group, the port indices 2, 3, and 8 are in a same CDM group, and the port indices 4, 5, and 10 are in a same CDM group. In a case of the double-symbol DMRS of type 2, a maximum of 12 DMRS ports are supported before expansion, and a maximum of 24 DMRS ports are supported after expansion. If all the three CDM groups are used for transmission of a DMRS, each terminal scheduled with three ports is used for transmission of the DMRS. Theoretically, the 24 DMRS ports support simultaneous scheduling of a maximum of eight terminals.

With reference to the foregoing descriptions, the plurality of reference port indices may be used as the target port indices (for example, a state when the 2 bits are 00), or each of the plurality of reference port indices plus X may be used as the target port index (for example, a state when the 2 bits are 01), for the port indices associated with the row indices 42 to 44 in the current table, a maximum of six UEs can be scheduled. For example, the port indices 0, 1, and 6 associated with the row index 42 are allocated to a UE 1, port indices 0+X, 1+X, and 6+X are allocated to a UE 2, the port indices 2, 3, and 8 associated with the row index 43 are allocated to a UE 3, port indices 2+X, 3+X, and 8+X are allocated to a UE 4, port indices 4, 5, and 10 associated with the row index 44 are allocated to a UE 5, and the port indices 4+X, 5+X, and 10+X are allocated to a UE 6.

To schedule more UEs, the table of the correspondence relationship between the row index and the DMRS port index (indices) under the condition of Antenna port(s) (1000+DMRS port), dmrs-Type=2, and maxLength=2 may be modified. A modified table of a correspondence relationship between the row index and the DMRS port index (indices) under the condition of Antenna port(s) (1000+DMRS port), dmrs-Type=2, and maxLength=2 includes one or more of the following correspondence relationships (the correspondence relationship indicates an association relationship between the row index and one or more port indices):
In the correspondence relationship, the row index is a first value, and the port indices include 7, 9, and 19.
In the correspondence relationship, the row index is a second value, and the port indices include 11, 21, and 23.

On a basis that six UEs can be scheduled based on the existing correspondence relationship, two UEs are scheduled by using the port indices in the two correspondence relationships, so that eight UEs can be scheduled simultaneously.

It should be noted that, in this case, X=12, where 19 is obtained based on 7+X, 21 is obtained based on 9+X, and 23 is obtained based on 11+X.

When the first information in step 301 includes the row index in the correspondence relationship, for example, if the row index may be the first value, the first information indicates that the reference port indices include 7, 9, and 19. For example, if the row index may be the second value, the first information indicates that the reference port indices include 11, 21, and 23. In addition, it should be noted that, in a case of the double-symbol DMRS of type 2, a maximum of 24 DMRS ports are supported after expansion, and port indices are 0 to 23. For the two correspondence relationships described above, the second information may only indicate that the one or more reference port indices indicated by the first information is used as the target port index (indices), and other cases that may be indicated by the second information described above are no longer applicable. Alternatively, the two correspondence relationships described above may be indicated by the row indices, and the second information is not needed.

For example, the correspondence relationship indicates an association relationship between a row index and one or more port indices. Further, the correspondence relationship may further include one or more of the following information: a quantity of DMRS CDM groups without data (a quantity of CDM groups for short), a quantity of codewords, a DMRS type, a maximum length (the maximum length indicates a maximum quantity of front-load symbols of a DMRS), and a quantity of front-load symbols.

The quantity of CDM groups indicates a value of the CDM groups in which the one or more port indices associated with the row index are distributed.

When the correspondence relationship includes the row index, the port index (indices), and the quantity of CDM groups, the correspondence relationship indicates an association relationship among the row index, the port index (indices), and the quantity of CDM groups. When the correspondence relationship includes the row index, the port index (indices), the quantity of CDM groups, and the quantity of codewords, the correspondence relationship indicates an association relationship among the row index, the port index (indices), the quantity of CDM groups, and the quantity of codewords. When the correspondence relationship includes the row index, the port index (indices), the quantity of CDM groups, the quantity of codewords, and the quantity of front-load symbols, the correspondence relationship indicates an association relationship among the row index, the one or more port indices, the quantity of CDM groups, the codeword, and the quantity of symbols. The rest may be deduced by analogy, and details are not described.

The correspondence relationship in which the row index is the first value and the port indices include 7, 9, and 19 may further include one or more of the following information: the quantity of CDM groups being 3, the quantity of codewords being 1, the quantity of front-load symbols being 2, the DMRS type being 2, and the maximum length being 2.

The correspondence relationship in which the row index is the second value and the port indices include 11, 21, and 23 may further include one or more of the following information: the quantity of CDM groups being 3, the quantity of codewords being 1, the quantity of front-load symbols being 2, the DMRS type being 2, and the maximum length being 2.

Any one of the two correspondence relationships may be a correspondence relationship in a table. Table 3 shows an example of a table of a correspondence relationship between a row index and DMRS port index (indices) provided in this embodiment of this application.

**Table 3: Table of the correspondence relationship between the row index and the DMRS port index (indices) (Antenna port(s) (1000+DMRS port), dmrs-Type=2, and maxLength=2)**

| Two codewords: Codeword 0 enabled and codeword 1 enabled (One codeword: Codeword 0 enabled, Codeword 1 disabled) | | | |
|---|---|---|---|
| Row index (Value) | Quantity of DMRS CDM groups without data (Number of DMRS CDM group(s) without data) | DMRS port index (indices) (DMRS port(s)) | Quantity of front-load symbols (Number of front-load symbols) |
| First value | 3 | 7, 9, and 19 | 2 |
| Second value | 3 | 11, 21, and 23 | 2 |

### Embodiment 2:

FIG. 4 shows an example of a schematic flowchart of a communication method according to an embodiment of this application. A terminal device in FIG. 4 may be a terminal device in FIG. 1, or a unit, a module, or a chip in the terminal device. A network device in FIG. 4 may be the network device in FIG. 1, or a unit, a module, or a chip in the network device.

The method includes the following steps.

Step 401: The network device determines row index information in a correspondence relationship.

The correspondence relationship indicates an association relationship between a row index and a plurality of port indices. A plurality of port indices associated with the row index information indicate ports used for a reference signal.

For uplink reference signal transmission, the network device indicates port index (indices) to the terminal device, and the terminal device sends a reference signal to the network device through port(s) corresponding to the index (indices). For downlink reference signal transmission, the network device also indicates port index (indices) to the terminal device, and the terminal device receives a reference signal from the network device through port(s) corresponding to the index (indices). For ease of differentiation, port index (indices) that needs to be indicated by the network device to the terminal device is referred to as target port index (indices), and there may be one or more target port indices.

When the network device determines the row index information in the correspondence relationship, for example, the network device may first determine a plurality of target port indices, and determine, based on the correspondence relationship and the plurality of target port indices, a row index associated with the plurality of target port indices.

For example, if the reference signal is a DMRS, the port is a DMRS port. That the reference signal is used to estimate a status of a channel between the network device and the terminal device may be understood as that the reference signal is a demodulation reference signal of the channel between the network device and the terminal device. This example may be applied to downlink DMRS transmission, or may be applied to uplink DMRS transmission. For the uplink DMRS transmission, the channel between the network device and the terminal device is used to carry uplink data. For the downlink DMRS transmission, the channel between the network device and the terminal device is used to carry downlink data. Specifically, the DMRS may be a DMRS for uplink transmission, and is used to perform channel estimation on a physical uplink shared channel (physical uplink shared channel, PUSCH). Alternatively, the DMRS may be a DMRS for downlink transmission, and is used to perform channel estimation on a physical downlink shared channel (physical downlink shared channel, PDSCH). It should be noted that, in addition to the DMRS, the reference signal may be a channel state information-reference signal CSI-RS, and the port is a CSI-RS port; or the reference signal may be an SSB, and the port is an SSB port. This is not limited in this application.

Step 402: The network device sends the row index information in the correspondence relationship to the terminal device. Correspondingly, the terminal device receives the row index information in the correspondence relationship from the network device.

Step 403: The terminal device determines port index (indices) (namely, target port index (indices)) based on the row index information and the correspondence relationship.

In an optional example, a communication procedure described in this embodiment is applicable to a scenario in which there is two codewords. For example, the network device may further send a third indication to the terminal device. Correspondingly, the terminal device may receive the third indication from the network device. The third indication indicates that the plurality of target port indices are associated with two codewords. Two codewords may usually carry a maximum of eight streams, and each stream corresponds to one DMRS port. In this case, a maximum of eight DMRS ports (a maximum of eight target port indices) are scheduled for the two codewords. The third indication may be carried in downlink control information DCI.

In this embodiment, when the example is applied to downlink DMRS transmission, the correspondence relationship maintained by the terminal device and the network device includes one or more of the following items (which may be specifically 1.1 to 4.4, or Table 4 to Table 7).

In addition, for ease of description, the correspondence relationships are numbered, for example, 1.1, 1.2, 1.3, 1.4, 2.1, 2.2, and the like. These numbers are merely used for ease of description, and are not used to limit a sequence, a time sequence, a priority, or an importance degree of the plurality of correspondence relationships. In addition, values a1, b1, c1, d1, a2, b2, and the like of the row indices in the correspondence relationships each are merely a number of a row. These numbers are merely for ease of description, are merely examples, and are not used to limit a sequence, a time sequence, a priority, or an importance degree of the plurality of row indices. During actual application, the row index may also have another value.

In the correspondence relationship 1.1, the row index is a1, and the DMRS port indices include 0, 1, 2, 3, and 0+X.

In the correspondence relationship 1.2, the row index is b1, and the DMRS port indices include 0, 1, 2, 3, 0+X, and 1+X.

In the correspondence relationship 1.3, the row index is c1, and the DMRS port indices include 0, 1, 2, 3, 0+X, 1+X, and 2+X.

In the correspondence relationship 1.4, the row index is d1, and the DMRS port indices include 0, 1, 2, 3, 0+X, 1+X, 2+X, and 3+X.

Further, optionally, any one of the correspondence relationships 1.1, 1.2, 1.3, and 1.4 may further include one or more of the following information: a quantity of DMRS CDM groups without data (a quantity of CDM groups for short), a quantity of codewords, a DMRS type, and a maximum length (the maximum length indicates a maximum quantity of front-load symbols of a DMRS).

For example, in any one of the correspondence relationships 1.1, 1.2, 1.3, and 1.4, the quantity of CDM groups is 2.

For example, in any one of the correspondence relationships 1.1, 1.2, 1.3, and 1.4, the quantity of codewords is 2.

For example, in any one of the correspondence relationships 1.1, 1.2, 1.3, and 1.4, the DMRS type is 1.

For example, in any one of the correspondence relationships 1.1, 1.2, 1.3, and 1.4, the maximum length is 1.

Any one of the two correspondence relationships 1.1, 1.2, 1.3, and 1.4 may be a correspondence relationship in a table. Table 4 shows an example of a table of a correspondence relationship between a row index and DMRS port index (indices) provided in this embodiment of this application.

**Table 4: Table of the correspondence relationship between the row index and the DMRS port index (indices) (Antenna port(s) (1000+DMRS port), dmrs-Type=1, and maxLength=1)**

| Two codewords: Codeword 0 enabled and codeword 1 enabled (Two codewords: Codeword 0 enabled, Codeword 1 enabled) | | |
|---|---|---|
| Row index (Value) | Quantity of DMRS CDM groups without data (Number of DMRS CDM group(s) without data) | DMRS port index (indices) (DMRS port(s)) |
| a1 | 2 | 0, 1, 2, 3, and 0+X |
| b1 | 2 | 0, 1, 2, 3, 0+X, and 1+X |
| c1 | 2 | 0, 1, 2, 3, 0+X, 1+X, and 2+X |
| d1 | 2 | 0, 1, 2, 3, 0+X, 1+X, 2+X, and 3+X |

It may be understood that, for the four rows a1, b1, c1, and d1 in Table 4, the network device and the terminal device may maintain one or more of the four rows.

The correspondence relationship may include one or more of the following:
In the correspondence relationship 2.1, the row index is a2, and the DMRS port indices include 0, 1, 4, 5, and 0+X.
In the correspondence relationship 2.2, the row index is b2, and the DMRS port indices include 0, 1, 4, 5, 0+X, and 1+X.
In the correspondence relationship 2.3, the row index is c2, and the DMRS port indices include 0, 1, 4, 5, 0+X, 1+X, and 4+X.
In the correspondence relationship 2.4, the row index is d2, and the DMRS port indices include 0, 1, 4, 5, 0+X, 1+X, 4+X, and 5+X.

Further, optionally, any one of the correspondence relationships 2.1, 2.2, 2.3, and 2.4 may further include one or more of the following information: a quantity of DMRS CDM groups without data (a quantity of CDM groups for short), a quantity of codewords, a DMRS type, a maximum length (the maximum length indicates a maximum quantity of front-load symbols of a DMRS), and a quantity of front-load symbols.

For example, in any one of the correspondence relationships 2.1, 2.2, 2.3, and 2.4, the quantity of CDM groups is 1.

For example, in any one of the correspondence relationships 2.1, 2.2, 2.3, and 2.4, the quantity of codewords is 2.

For example, in any one of the correspondence relationships 2.1, 2.2, 2.3, and 2.4, the DMRS type is 1.

For example, in any one of the correspondence relationships 2.1, 2.2, 2.3, and 2.4, the maximum length is 2.

For example, in any one of the correspondence relationships 2.1, 2.2, 2.3, and 2.4, the quantity of front-load symbols is 2.

Any one of the two correspondence relationships 2.1, 2.2, 2.3, and 2.4 may be a correspondence relationship in a table. Table 5 shows an example of a table of a correspondence relationship between a row index and DMRS port index (indices) provided in this embodiment of this application.

**Table 5: Table of the correspondence relationship between the row index and the DMRS port index (indices) (Antenna port(s) (1000+DMRS port), dmrs-Type=1, and maxLength=2)**

| Two codewords: Codeword 0 enabled and codeword 1 enabled (Two codewords: Codeword 0 enabled, Codeword 1 enabled) | | | |
|---|---|---|---|
| Row index (Value) | Number of DMRS CDM groups without data (Number of DMRS CDM group(s) without data) | DMRS port index (indices) (DMRS port(s)) | Number of front-load symbols (Number of front-load symbols) |
| a2 | 1 | 0, 1, 4, 5, and 0+X | 2 |
| b2 | 1 | 0, 1, 4, 5, 0+X, and 1+X | 2 |
| c2 | 1 | 0, 1, 4, 5, 0+X, 1+X, and 4+X | 2 |
| d2 | 1 | 0, 1, 4, 5, 0+X, 1+X, 4+X, and 5+X | 2 |

It may be understood that, for the four rows a2, b2, c2, and d2 in Table 5, the network device and the terminal device may maintain one or more of the four rows.

For example, content in Table 5 may be added based on existing content in Table 7.3.1.2.2-2 and Table 7.3.1.2.2-2A in a protocol 38.212, and one CDM group is added to schedule more than four DMRS ports.

The correspondence relationship may include one or more of the following:
In the correspondence relationship 3.1, the row index is a3, and the DMRS port indices include 0, 1, 2, 3, and 0+X.
In the correspondence relationship 3.2, the row index is b3, and the DMRS port indices include 0, 1, 2, 3, 0+X, and 1+X.
In the correspondence relationship 3.3, the row index is c3, and the DMRS port indices include 0, 1, 2, 3, 0+X, 1+X, and 2+X.
In the correspondence relationship 3.4, the row index is d3, and the DMRS port indices include 0, 1, 2, 3, 0+X, 1+X, 2+X, and 3+X.

Further, optionally, any one of the correspondence relationships 3.1, 3.2, 3.3, and 3.4 may further include one or more of the following information: a quantity of DMRS CDM groups without data (a quantity of CDM groups for short), a quantity of codewords, a DMRS type, and a maximum length (the maximum length indicates a maximum quantity of front-load symbols of a DMRS).

For example, in any one of the correspondence relationships 3.1, 3.2, 3.3, and 3.4, the quantity of CDM groups is 2.

For example, in any one of the correspondence relationships 3.1, 3.2, 3.3, and 3.4, the quantity of codewords is 2.

For example, in any one of the correspondence relationships 3.1, 3.2, 3.3, and 3.4, the DMRS type is 2.

For example, in any one of the correspondence relationships 3.1, 3.2, 3.3, and 3.4, the maximum length is 1.

Any one of the two correspondence relationships 3.1, 3.2, 3.3, and 3.4 may be a correspondence relationship in a table. Table 6 shows an example of a table of a correspondence relationship between a row index and DMRS port index (indices) provided in this embodiment of this application.

**Table 6: Table of the correspondence relationship between the row index and the DMRS port index (indices) (Antenna port(s) (1000+DMRS port), dmrs-Type=2, and maxLength=1)**

| Two codewords: Codeword 0 enabled and codeword 1 enabled (Two codewords: Codeword 0 enabled, Codeword 1 enabled) | | |
|---|---|---|
| Row index (Value) | Number of DMRS CDM groups without data (Number of DMRS CDM group(s) without data) | DMRS port index (indices) (DMRS port(s)) |
| a3 | 2 | 0, 1, 2, 3, and 0+X |
| b3 | 2 | 0, 1, 2, 3, 0+X, and 1+X |
| c3 | 2 | 0, 1, 2, 3, 0+X, 1+X, and 2+X |
| d3 | 2 | 0, 1, 2, 3, 0+X, 1+X, 2+X, and 3+X |

It may be understood that, for the four rows a3, b3, c3, and d3 in Table 6, the network device and the terminal device may maintain one or more of the four rows.

For example, content in Table 6 may be added based on existing content in Table 7.3.1.2.2-3 and Table 7.3.1.2.2-3A in a protocol 38.212, and two CDM groups are added to schedule more than four DMRS ports.

The correspondence relationship may include one or more of the following:
In the correspondence relationship 4.1, the row index is a4, and the DMRS port indices include 0, 1, 6, 7, and 0+X.
In the correspondence relationship 4.2, the row index is b4, and the DMRS port indices include 0, 1, 6, 7, 0+X, and 1+X.
In the correspondence relationship 4.3, the row index is c4, and the DMRS port indices include 0, 1, 6, 7, 0+X, 1+X, and 6+X.
In the correspondence relationship 4.4, the row index is d4, and the DMRS port indices include 0, 1, 6, 7, 0+X, 1+X, 6+X, and 7+X.

Further, optionally, any one of the correspondence relationships 4.1, 4.2, 4.3, and 4.4 may further include one or more of the following information: a quantity of DMRS CDM groups without data (a quantity of CDM groups for short), a quantity of codewords, a DMRS type, and a maximum length (the maximum length indicates a maximum quantity of front-load symbols of a DMRS).

For example, in any one of the correspondence relationships 4.1, 4.2, 4.3, and 4.4, the quantity of CDM groups is 1.

For example, in any one of the correspondence relationships 4.1, 4.2, 4.3, and 4.4, the quantity of codewords is 2.

For example, in any one of the correspondence relationships 4.1, 4.2, 4.3, and 4.4, the DMRS type is 2.

For example, in any one of the correspondence relationships 4.1, 4.2, 4.3, and 4.4, the maximum length is 2.

For example, in any one of the correspondence relationships 4.1, 4.2, 4.3, and 4.4, the quantity of front-load symbols is 2.

Any one of the two correspondence relationships 4.1, 4.2, 4.3, and 4.4 may be a correspondence relationship in a table. Table 7 shows an example of a table of a correspondence relationship between a row index and DMRS port index (indices) provided in this embodiment of this application.

**Table 7: Table of the correspondence relationship between the row index and the DMRS port index (indices) (Antenna port(s) (1000+DMRS port), dmrs-Type=2, and maxLength=2)**

| Two codewords: Codeword 0 enabled and codeword 1 enabled (Two codewords: Codeword 0 enabled, Codeword 1 enabled) | | | |
|---|---|---|---|
| Row index (Value) | Number of DMRS CDM groups without data (Number of DMRS CDM group(s) without data) | DMRS port index (indices) (DMRS port(s)) | Number of front-load symbols (Number of front-load symbols) |
| a4 | 1 | 0, 1, 6, 7, and 0+X | 2 |
| b4 | 1 | 0, 1, 6, 7, 0+X, and 1+X | 2 |
| c4 | 1 | 0, 1, 6, 7, 0+X, 1+X, and 6+X | 2 |
| d4 | 1 | 0, 1, 6, 7, 0+X, 1+X, 6+X, and 7+X | 2 |

It may be understood that, for the four rows a4, b4, c4, and d4 in Table 7, the network device and the terminal device may maintain one or more of the four rows.

For example, content in Table 7 may be added based on existing content in Table 7.3.1.2.2-4 and Table 7.3.1.2.2-4A in a protocol 38.212, and one CDM group is added to schedule more than four DMRS ports.

In this embodiment, when the example is applied to uplink DMRS transmission, the correspondence relationship maintained by the terminal device and the network device includes one or more of the following items (which may be specifically 5.1 to 20.3, or Table 8 to Table 23).

In addition, for ease of description, the correspondence relationships are numbered, for example, 5.1, 6.1, ..., and the like. These numbers are merely used for ease of description, and are not used to limit a sequence, a time sequence, a priority, or an importance degree of the plurality of correspondence relationships. In addition, values 0, 1, 2, ..., and the like of the row indices in the correspondence relationships each are merely a number of a row. These numbers are merely for ease of description, are merely examples, and are not used to limit a sequence, a time sequence, a priority, or an importance degree of the plurality of row indices. During actual application, the row index may also have another value.

In the correspondence relationship 5.1, the row index is 0, and the DMRS port indices include 0, 1, 2, 3, and 0+X.

Further, optionally, the correspondence relationship 5.1 may further include one or more of the following information: a quantity of DMRS CDM groups without data (a quantity of CDM groups for short), a DMRS type, a maximum length (the maximum length indicates a maximum quantity of front-load symbols of a DMRS), and a rank value (the rank value represents a quantity of transport layers).

For example, in the correspondence relationship 5.1, the quantity of CDM groups is 2, the DMRS type is 1, the maximum length is 1, and the rank is 5.

The correspondence relationship 5.1 may be a correspondence relationship in a table. Table 8 shows an example of a table of a correspondence relationship between a row index and DMRS port index (indices) provided in this embodiment of this application.

**Table 8: Table of the correspondence relationship between the row index and the DMRS port index (indices) (Antenna port(s) (1000+DMRS port), dmrs-Type=1, maxLength=1, and rank=5)**

| Row index (Value) | Number of DMRS CDM groups without data (Number of DMRS CDM group(s) without data) | DMRS port index (indices) (DMRS port(s)) |
|---|---|---|
| 0 | 2 | 0, 1, 2, 3, and 0+X |
| 1 to 15 | Reserved (Reserved) | Reserved (Reserved) |

In the correspondence relationship 6.1, the row index is 0, and the DMRS port indices include 0, 1, 2, 3, 0+X, and 1+X.

Further, optionally, the correspondence relationship 6.1 may further include one or more of the following information: a quantity of DMRS CDM groups without data (a quantity of CDM groups for short), a DMRS type, a maximum length (the maximum length indicates a maximum quantity of front-load symbols of a DMRS), and a rank value (the rank value represents a quantity of transport layers).

For example, in the correspondence relationship 6.1, the quantity of CDM groups is 2, the DMRS type is 1, the maximum length is 1, and the rank is 6.

The correspondence relationship 6.1 may be a correspondence relationship in a table. Table 9 shows an example of a table of a correspondence relationship between a row index and DMRS port index (indices) provided in this embodiment of this application.

**Table 9: Table of the correspondence relationship between the row index and the DMRS port index (indices) (Antenna port(s) (1000+DMRS port), dmrs-Type=1, maxLength=1, and rank=6)**

| Row index (Value) | Number of DMRS CDM groups without data (Number of DMRS CDM group(s) without data) | DMRS port index (indices) (DMRS port(s)) |
|---|---|---|
| 0 | 2 | 0, 1, 2, 3, 0+X, and 1+X |
| 1 to 15 | Reserved | Reserved |

In the correspondence relationship 7.1, the row index is 0, and the DMRS port indices include 0, 1, 2, 3, 0+X, 1+X, and 2+X.

Further, optionally, the correspondence relationship 7.1 may further include one or more of the following information: a quantity of DMRS CDM groups without data (a quantity of CDM groups for short), a DMRS type, a maximum length (the maximum length indicates a maximum quantity of front-load symbols of a DMRS), and a rank value (the rank value represents a quantity of transport layers).

For example, in the correspondence relationship 7.1, the quantity of CDM groups is 2, the DMRS type is 1, the maximum length is 1, and the rank is 7.

The correspondence relationship 7.1 may be a correspondence relationship in a table. Table 10 shows an example of a table of a correspondence relationship between a row index and DMRS port index (indices) provided in this embodiment of this application.

**Table 10: Table of the correspondence relationship between the row index and the DMRS port index (indices) (Antenna port(s) (1000+DMRS port), dmrs-Type=1, maxLength=1, and rank=7)**

| Row index (Value) | Number of DMRS CDM groups without data (Number of DMRS CDM group(s) without data) | DMRS port index (indices) (DMRS port(s)) |
|---|---|---|
| 0 | 2 | 0, 1, 2, 3, 0+X, 1+X, |
| | | and 2+X |
| 1 to 15 | Reserved | Reserved |

In the correspondence relationship 8.1, the row index is 0, and the DMRS port indices include 0, 1, 2, 3, 0+X, 1+X, 2+X, and 3+X.

Further, optionally, the correspondence relationship 8.1 may further include one or more of the following information: a quantity of DMRS CDM groups without data (a quantity of CDM groups for short), a DMRS type, a maximum length (the maximum length indicates a maximum quantity of front-load symbols of a DMRS), and a rank value (the rank value represents a quantity of transport layers).

For example, in the correspondence relationship 8.1, the quantity of CDM groups is 2, the DMRS type is 1, the maximum length is 1, and the rank is 8.

The correspondence relationship 8.1 may be a correspondence relationship in a table. Table 11 shows an example of a table of a correspondence relationship between a row index and DMRS port index (indices) provided in this embodiment of this application.

**Table 11: Table of the correspondence relationship between the row index and the DMRS port index (indices) (Antenna port(s) (1000+DMRS port), dmrs-Type=1, maxLength=1, and rank=8)**

| Row index (Value) | Number of DMRS CDM groups without data (Number of DMRS CDM group(s) without data) | DMRS port index (indices) (DMRS port(s)) |
|---|---|---|
| 0 | 2 | 0, 1, 2, 3, 0+X, 1+X, 2+X, and 3+X |
| 1 to 15 | Reserved | Reserved |

In the correspondence relationship 9.1, the row index is 0, and the DMRS port indices include 0, 1, 2, 3, and 4.

In the correspondence relationship 9.2, the row index is 1, and the DMRS port indices include 0, 1, 2, 3, and 0+X.

Further, optionally, the correspondence relationship 9.1 and/or the correspondence relationship 9.2 may further include one or more of the following information: a quantity of DMRS CDM groups without data (a quantity of CDM groups for short), a DMRS type, a maximum length (the maximum length indicates a maximum quantity of front-load symbols of a DMRS), and a rank value (the rank value represents a quantity of transport layers).

For example, in the correspondence relationship 9.1, the quantity of CDM groups is 3, the DMRS type is 2, the maximum length is 1, and the rank is 5.

For example, in the correspondence relationship 9.2, the quantity of CDM groups is 2, the DMRS type is 2, the maximum length is 1, and the rank is 5.

The correspondence relationship 9.1 and/or the correspondence relationship 9.2 may be a correspondence relationship in a table. Table 12 shows an example of a table of a correspondence relationship between a row index and DMRS port index (indices) provided in this embodiment of this application.

**Table 12: Table of the correspondence relationship between the row index and the DMRS port index (indices) (Antenna port(s) (1000+DMRS port), dmrs-Type=2, maxLength=1, and rank=5)**

| Row index (Value) | Number of DMRS CDM groups without data (Number of DMRS CDM group(s) without data) | DMRS port index (indices) (DMRS port(s)) |
|---|---|---|
| 0 | 3 | 0 to 4 |
| 1 | 2 | 0, 1, 2, 3, and 0+X |
| 2 to 15 | Reserved | Reserved |

In the correspondence relationship 10.1, the row index is 0, and the DMRS port indices include 0, 1, 2, 3, 4, and 5.

In the correspondence relationship 10.2, the row index is 1 and the DMRS port indices include 0, 1, 2, 3, 4, and 6.

Further, optionally, the correspondence relationship 10.1 and/or the correspondence relationship 10.2 may further include one or more of the following information: a quantity of DMRS CDM groups without data (a quantity of CDM groups for short), a DMRS type, a maximum length (the maximum length indicates a maximum quantity of front-load symbols of a DMRS), and a rank value (the rank value represents a quantity of transport layers).

For example, in the correspondence relationship 10.1, the quantity of CDM groups is 3, the DMRS type is 2, the maximum length is 1, and the rank is 6.

For example, in the correspondence relationship 10.2, the quantity of CDM groups is 2, the DMRS type is 2, the maximum length is 1, and the rank is 6.

The correspondence relationship 10.1 and/or the correspondence relationship 10.2 may be a correspondence relationship in a table. Table 13 shows an example of a table of a correspondence relationship between a row index and DMRS port index (indices) provided in this embodiment of this application.

**Table 13: Table of the correspondence relationship between the row index and the DMRS port index (indices) (Antenna port(s) (1000+DMRS port), dmrs-Type=2, maxLength=1, and rank=6)**

| Row index (Value) | Number of DMRS CDM groups without data (Number of DMRS CDM group(s) without data) | DMRS port index (indices) (DMRS port(s)) |
|---|---|---|
| 0 | 3 | 0 to 5 |
| 1 | 2 | 0, 1, 2, 3, 4, and 6 |
| 2 to 15 | Reserved | Reserved |

In the correspondence relationship 11.1, the row index is 0, and the DMRS port indices include 0, 1, 2, 3, 0+X, 1+X, and 2+X.

Further, optionally, the correspondence relationship 11.1 may further include one or more of the following information: a quantity of DMRS CDM groups without data (a quantity of CDM groups for short), a DMRS type, a maximum length (the maximum length indicates a maximum quantity of front-load symbols of a DMRS), and a rank value (the rank value represents a quantity of transport layers).

For example, in the correspondence relationship 11.1, the quantity of CDM groups is 2, the DMRS type is 2, the maximum length is 1, and the rank is 7.

The correspondence relationship 11.1 may be a correspondence relationship in a table. Table 14 shows an example of a table of a correspondence relationship between a row index and DMRS port index (indices) provided in this embodiment of this application.

**Table 14: Table of the correspondence relationship between the row index and the DMRS port index (indices) (Antenna port(s) (1000+DMRS port), dmrs-Type=2, maxLength=1, and rank=7)**

| Row index (Value) | Number of DMRS CDM groups without data (Number of DMRS CDM group(s) without data) | DMRS port index (indices) (DMRS port(s)) |
|---|---|---|
| 0 | 2 | 0, 1, 2, 3, 0+X, 1+X, and 2+X |
| 1 to 15 | Reserved | Reserved |

In the correspondence relationship 12.1, the row index is 0, and the DMRS port indices include 0, 1, 2, 3, 0+X, 1+X, 2+X, and 3+X.

Further, optionally, the correspondence relationship 12.1 may further include one or more of the following information: a quantity of DMRS CDM groups without data (a quantity of CDM groups for short), a DMRS type, a maximum length (the maximum length indicates a maximum quantity of front-load symbols of a DMRS), and a rank value (the rank value represents a quantity of transport layers).

For example, in the correspondence relationship 12.1, the quantity of CDM groups is 2, the DMRS type is 2, the maximum length is 1, and the rank is 8.

The correspondence relationship 12.1 may be a correspondence relationship in a table. Table 15 shows an example of a table of a correspondence relationship between a row index and DMRS port index (indices) provided in this embodiment of this application.

**Table 15: Table of the correspondence relationship between the row index and the DMRS port index (indices) (Antenna port(s) (1000+DMRS port), dmrs-Type=2, maxLength=1, and rank=8)**

| Row index (Value) | Number of DMRS CDM groups without data (Number of DMRS CDM group(s) without data) | DMRS port index (indices) (DMRS port(s)) |
|---|---|---|
| 0 | 2 | 0, 1, 2, 3, 0+X, 1+X, 2+X, and 3+X |
| 1 to 15 | Reserved | Reserved |

In the correspondence relationship 13.1, the row index is 0, and the DMRS port indices include 0, 1, 2, 3, and 4.

In the correspondence relationship 13.2, the row index is 1, and the DMRS port indices include 0, 1, 4, 5, and 0+X.

Further, optionally, the correspondence relationship 13.1 and/or the correspondence relationship 13.2 may further include one or more of the following information: a quantity of DMRS CDM groups without data (a quantity of CDM groups for short), a DMRS type, a maximum length (the maximum length indicates a maximum quantity of front-load symbols of a DMRS), a rank value (the rank value represents a quantity of transport layers), and a quantity of front-load symbols.

For example, in the correspondence relationship 13.1, the quantity of CDM groups is 2, the DMRS type is 1, the maximum length is 2, the rank is 5, and the quantity of front-load symbols is 2.

For example, in the correspondence relationship 13.2, the quantity of CDM groups is 1, the DMRS type is 1, the maximum length is 2, the rank is 5, and the quantity of front-load symbols is 2.

The correspondence relationship 13.1 and/or the correspondence relationship 13.2 may be correspondence relationships/a correspondence relationship in a table. Table 16 shows an example of a table of a correspondence relationship between a row index and DMRS port index (indices) provided in this embodiment of this application.

**Table 16: Table of the correspondence relationship between the row index and the DMRS port index (indices) (Antenna port(s) (1000+DMRS port), dmrs-Type=1, maxLength=2, and rank=5)**

| Row index (Value) | Number of DMRS CDM groups without data (Number of DMRS CDM group(s) without data) | DMRS port index (indices) (DMRS port(s)) | Number of front-load symbols (Number of front-load symbols) |
|---|---|---|---|
| 0 | 2 | 0 to 4 | 2 |
| 1 | 1 | 0, 1, 4, 5, and 0+X | 2 |
| 2 to 31 | Reserved | Reserved | Reserved |

In the correspondence relationship 14.1, the row index is 0, and the DMRS port indices include 0, 1, 2, 3, 4, and 6.

In the correspondence relationship 14.2, the row index is 1, and the DMRS port indices include 0, 1, 4, 5, 0+X, and 1+X.

Further, optionally, the correspondence relationship 14.1 and/or the correspondence relationship 14.2 may further include one or more of the following information: a quantity of DMRS CDM groups without data (a quantity of CDM groups for short), a DMRS type, a maximum length (the maximum length indicates a maximum quantity of front-load symbols of a DMRS), a rank value (the rank value represents a quantity of transport layers), and a quantity of front-load symbols.

For example, in the correspondence relationship 14.1, the quantity of CDM groups is 2, the DMRS type is 1, the maximum length is 2, the rank is 6, and the quantity of front-load symbols is 2.

For example, in the correspondence relationship 14.2, the quantity of CDM groups is 1, the DMRS type is 1, the maximum length is 2, the rank is 6, and the quantity of front-load symbols is 2.

The correspondence relationship 14.1 and/or the correspondence relationship 14.2 may be correspondence relationships/a correspondence relationship in a table. Table 17 shows an example of a table of a correspondence relationship between a row index and DMRS port index (indices) provided in this embodiment of this application.

**Table 17: Table of the correspondence relationship between the row index and the DMRS port index (indices) (Antenna port(s) (1000+DMRS port), dmrs-Type=1, maxLength=2, and rank=6)**

| Row index (Value) | Number of DMRS CDM groups without data (Number of DMRS CDM group(s) without data) | DMRS port index (indices) (DMRS port(s)) | Number of front-load symbols (Number of front-load symbols) |
|---|---|---|---|
| 0 | 2 | 0, 1, 2, 3, 4, and 6 | 2 |
| 1 | 1 | 0, 1, 4, 5, 0+X, and 1+X | 2 |
| 2 to 31 | Reserved | Reserved | Reserved |

In the correspondence relationship 15.1, the row index is 0, and the DMRS port indices include 0, 1, 2, 3, 4, 5, and 6.

In the correspondence relationship 15.2, the row index is 1, and the DMRS port indices include 0, 1, 4, 5, 0+X, 1+X, and 4+X.

Further, optionally, the correspondence relationship 15.1 and/or the correspondence relationship 15.2 may further include one or more of the following information: a quantity of DMRS CDM groups without data (a quantity of CDM groups for short), a DMRS type, a maximum length (the maximum length indicates a maximum quantity of front-load symbols of a DMRS), a rank value (the rank value represents a quantity of transport layers), and a quantity of front-load symbols.

For example, in the correspondence relationship 15.1, the quantity of CDM groups is 2, the DMRS type is 1, the maximum length is 2, the rank is 7, and the quantity of front-load symbols is 2.

For example, in the correspondence relationship 15.2, the quantity of CDM groups is 1, the DMRS type is 1, the maximum length is 2, the rank is 7, and the quantity of front-load symbols is 2.

The correspondence relationship 15.1 and/or the correspondence relationship 15.2 may be correspondence relationships/a correspondence relationship in a table. Table 18 shows an example of a table of a correspondence relationship between a row index and DMRS port index (indices) provided in this embodiment of this application.

**Table 18: Table of the correspondence relationship between the row index and the DMRS port index (indices) (Antenna port(s) (1000+DMRS port), dmrs-Type=1, maxLength=2, and rank=7)**

| Row index (Value) | Number of DMRS CDM groups without data (Number of DMRS CDM group(s) without data) | DMRS port index (indices) (DMRS port(s)) | Number of front-load symbols (Number of front-load symbols) |
|---|---|---|---|
| 1 | 2 | 0,1,2,3,4,5,6 | 2 |
| 0 | 1 | 0, 1, 4, 5, 0+X, 1+X, and 4+X | 2 |
| 2 to 31 | Reserved | Reserved | Reserved |

In the correspondence relationship 16.1, the row index is 0, and the DMRS port indices include 0, 1, 2, 3, 4, 5, 6, and 7.

In the correspondence relationship 16.2, the row index is 1, and the DMRS port indices include 0, 1, 4, 5, 0+X, 1+X, 4+X, and 5+X.

Further, optionally, the correspondence relationship 16.1 and/or the correspondence relationship 16.2 may further include one or more of the following information: a quantity of DMRS CDM groups without data (a quantity of CDM groups for short), a DMRS type, a maximum length (the maximum length indicates a maximum quantity of front-load symbols of a DMRS), a rank value (the rank value represents a quantity of transport layers), and a quantity of front-load symbols.

For example, in the correspondence relationship 16.1, the quantity of CDM groups is 2, the DMRS type is 1, the maximum length is 2, the rank is 8, and the quantity of front-load symbols is 2.

For example, in the correspondence relationship 16.2, the quantity of CDM groups is 1, the DMRS type is 1, the maximum length is 2, the rank is 8, and the quantity of front-load symbols is 2.

The correspondence relationship 16.1 and/or the correspondence relationship 16.2 may be correspondence relationships/a correspondence relationship in a table. Table 19 shows an example of a table of a correspondence relationship between a row index and DMRS port index (indices) provided in this embodiment of this application.

**Table 19: Table of the correspondence relationship between the row index and the DMRS port index (indices) (Antenna port(s) (1000+DMRS port), dmrs-Type=1, maxLength=2, and rank=8)**

| Row index (Value) | Number of DMRS CDM groups without data (Number of DMRS CDM group(s) without data) | DMRS port index (indices) (DMRS port(s)) | Number of front-load symbols (Number of front-load symbols) |
|---|---|---|---|
| 0 | 2 | 0,1,2,3,4,5,6,7 | 2 |
| 1 | 1 | 0, 1, 4, 5, 0+X, 1+X, 4+X, and 5+X | 2 |
| 2 to 31 | Reserved | Reserved | Reserved |

In the correspondence relationship 17.1, the row index is 0, and the DMRS port indices include 0, 1, 2, 3, 4, and 7.

In the correspondence relationship 17.2, the row index is 1, and the DMRS port indices include 0, 1, 2, 3, and 6.

In the correspondence relationship 17.3, the row index is 2, and the DMRS port indices include 0, 1, 6, 7, and 0+X.

Further, optionally, any one of the correspondence relationships 17.1 to 17.3 may further include one or more of the following information: a quantity of DMRS CDM groups without data (a quantity of CDM groups for short), a DMRS type, a maximum length (the maximum length indicates a maximum quantity of front-load symbols of a DMRS), a rank value (the rank value represents a quantity of transport layers), and a quantity of front-load symbols.

For example, in the correspondence relationship 17.1, the quantity of CDM groups is 3, the DMRS type is 2, the maximum length is 2, the rank is 5, and the quantity of front-load symbols is 1.

For example, in the correspondence relationship 17.2, the quantity of CDM groups is 2, the DMRS type is 2, the maximum length is 2, the rank is 5, and the quantity of front-load symbols is 2.

For example, in the correspondence relationship 17.3, the quantity of CDM groups is 1, the DMRS type is 2, the maximum length is 2, the rank is 5, and the quantity of front-load symbols is 2.

Any one of the correspondence relationships 17.1 to 17.3 may be a correspondence relationship in a table. Table 20 shows an example of a table of a correspondence relationship between a row index and DMRS port index (indices) provided in this embodiment of this application.

**Table 20: Table of the correspondence relationship between the row index and the DMRS port index (indices) (Antenna port(s) (1000+DMRS port), dmrs-Type=2, maxLength=2, and rank=5)**

| Row index (Value) | Number of DMRS CDM groups without data (Number of DMRS CDM group(s) without data) | DMRS port index (indices) (DMRS port(s)) | Number of front-load symbols (Number of front-load symbols) |
|---|---|---|---|
| 0 | 3 | 0 to 4 | 1 |
| 1 | 2 | 0, 1, 2, 3, and 6 | 2 |
| 2 | 1 | 0, 1, 6, 7, and 0+X | 2 |
| 3 to 31 | Reserved | Reserved | Reserved |

In the correspondence relationship 18.1, the row index is 0, and the DMRS port indices include 0, 1, 2, 3, 4, and 5.

In the correspondence relationship 18.2, the row index is 1, and the DMRS port indices include 0, 1, 2, 3, 6, and 8.

In the correspondence relationship 18.3, the row index is 2, and the DMRS port indices include 0, 1, 6, 7, 0+X, and 1+X.

Further, optionally, any one of the correspondence relationships 18.1 to 18.3 may further include one or more of the following information: a quantity of DMRS CDM groups without data (a quantity of CDM groups for short), a DMRS type, a maximum length (the maximum length indicates a maximum quantity of front-load symbols of a DMRS), a rank value (the rank value represents a quantity of transport layers), and a quantity of front-load symbols.

For example, in the correspondence relationship 18.1, the quantity of CDM groups is 3, the DMRS type is 2, the maximum length is 2, the rank is 6, and the quantity of front-load symbols is 1.

For example, in the correspondence relationship 18.2, the quantity of CDM groups is 2, the DMRS type is 2, the maximum length is 2, the rank is 6, and the quantity of front-load symbols is 2.

For example, in the correspondence relationship 18.3, the quantity of CDM groups is 1, the DMRS type is 2, the maximum length is 2, the rank is 6, and the quantity of front-load symbols is 2.

Any one of the correspondence relationships 18.1 to 18.3 may be a correspondence relationship in a table. Table 21 shows an example of a table of a correspondence relationship between a row index and DMRS port index (indices) provided in this embodiment of this application.

**Table 21: Table of the correspondence relationship between the row index and the DMRS port index (indices) (Antenna port(s) (1000+DMRS port), dmrs-Type=2, maxLength=2, and rank=6)**

| Row index (Value) | Number of DMRS CDM groups without data (Number of DMRS CDM group(s) without data) | DMRS port index (indices) (DMRS port(s)) | Number of front-load symbols (Number of front-load symbols) |
|---|---|---|---|
| 0 | 3 | 0 to 5 | 1 |
| 1 | 2 | 0, 1, 2, 3, and 6,8 | 2 |
| 2 | 1 | 0, 1, 6, 7, 0+X, and 1+X | 2 |
| 3 to 31 | Reserved | Reserved | Reserved |

In the correspondence relationship 19.1, the row index is 0, and the DMRS port indices include 0, 1, 2, 3, 6, 7, and 8.

In the correspondence relationship 19.2, the row index is 1, and the DMRS port indices include 0, 1, 6, 7, 0+X, 1+X, and 6+X.

Further, optionally, the correspondence relationship 19.1 and/or the correspondence relationship 19.2 may further include one or more of the following information: a quantity of DMRS CDM groups without data (a quantity of CDM groups for short), a DMRS type, a maximum length (the maximum length indicates a maximum quantity of front-load symbols of a DMRS), a rank value (the rank value represents a quantity of transport layers), and a quantity of front-load symbols.

For example, in the correspondence relationship 19.1, the quantity of CDM groups is 2, the DMRS type is 2, the maximum length is 2, the rank is 7, and the quantity of front-load symbols is 2.

For example, in the correspondence relationship 19.2, the quantity of CDM groups is 1, the DMRS type is 2, the maximum length is 2, the rank is 7, and the quantity of front-load symbols is 2.

The correspondence relationship 19.1 and/or the correspondence relationship 19.2 may be correspondence relationships/a correspondence relationship in a table. Table 22 shows an example of a table of a correspondence relationship between a row index and DMRS port index (indices) provided in this embodiment of this application.

**Table 22: Table of the correspondence relationship between the row index and the DMRS port index (indices) (Antenna port(s) (1000+DMRS port), dmrs-Type=2, maxLength=2, and rank=7)**

| Row index (Value) | Number of DMRS CDM groups without data (Number of DMRS CDM group(s) without data) | DMRS port index (indices) (DMRS port(s)) | Number of front-load symbols (Number of front-load symbols) |
|---|---|---|---|
| 0 | 2 | 0, 1, 2, 3, 6, 7, and 8 | 2 |
| 1 | 1 | 0, 1, 6, 7, 0+X, 1+X, and 6+X | 2 |
| 2 to 31 | Reserved | Reserved | Reserved |

In the correspondence relationship 20.1, the row index is 0, and the DMRS port indices include 0, 1, 2, 3, 6, 7, 8, and 9.

In the correspondence relationship 20.2, the row index is 1, and the DMRS port indices include 0, 1, 6, 7, 0+X, 1+X, 6+X, and 7+X.

Further, optionally, the correspondence relationship 20.1 and/or the correspondence relationship 20.2 may further include one or more of the following information: a quantity of DMRS CDM groups without data (a quantity of CDM groups for short), a DMRS type, a maximum length (the maximum length indicates a maximum quantity of front-load symbols of a DMRS), a rank value (the rank value represents a quantity of transport layers), and a quantity of front-load symbols.

For example, in the correspondence relationship 20.1, the quantity of CDM groups is 2, the DMRS type is 2, the maximum length is 2, the rank is 8, and the quantity of front-load symbols is 2.

For example, in the correspondence relationship 20.2, the quantity of CDM groups is 1, the DMRS type is 2, the maximum length is 2, the rank is 8, and the quantity of front-load symbols is 2.

The correspondence relationship 20.1 and/or the correspondence relationship 20.2 may be correspondence relationships/a correspondence relationship in a table. Table 23 shows an example of a table of a correspondence relationship between a row index and DMRS port index (indices) provided in this embodiment of this application.

**Table 23: Table of the correspondence relationship between the row index and the DMRS port index (indices) (Antenna port(s) (1000+DMRS port), dmrs-Type=2, maxLength=2, and rank=8)**

| Row index (Value) | Number of DMRS CDM groups without data (Number of DMRS CDM group(s) without data) | DMRS port index (indices) (DMRS port(s)) | Number of front-load symbols (Number of front-load symbols) |
|---|---|---|---|
| 0 | 2 | 0, 1, 2, 3, 6, 7, and 8,9 | 2 |
| 1 | 1 | 0, 1, 6, 7, 0+X, 1+X, 6+X, and 7+X | 2 |
| 2 to 31 | Reserved | Reserved | Reserved |

### Embodiment 3:

Phase noise refers to a random change that is of a phase of an output signal of a system and that is caused by various types of noise (such as random white noise and flicker noise) of a radio frequency component. The phase noise has little impact on a low frequency band (for example, a sub-6 GHz frequency band). However, in a high frequency band (millimeter wave), due to a significant increase in a quantity of times of frequency multiplication of a reference clock source and a process level, power consumption, and the like of a component, impact of the phase noise also greatly increases. Therefore, a phase tracking reference signal (phase tracking reference signal, PTRS) signal is used in NR to perform phase estimation and compensation.

In a current technology, for uplink transmission, a UE may be configured with one PTRS port or two PTRS ports, for example, configured with a PTRS port 0 and/or a PTRS port 1. The PTRS port is indicated by maxNrofPorts in a higher layer parameter PTRS-UplinkConfig. An access network device may further configure, for the UE, a DMRS port associated with the PTRS port. One DMRS port may indicate a stream. By configuring the DMRS port associated with the PTRS port, a stream on which the PTRS of the UE is transmitted may be indicated. The DMRS port associated with the PTRS port is indicated by a field PTRS-DMRS association in downlink control information DCI.

In the current technology, transmission of a maximum of four streams is supported in the uplink transmission. To be specific, the access network device configures, for the UE, a maximum of four DMRS ports associated with the PTRS port, and the PTRS-DMRS association occupies 2 bits.

Table 24 shows a PTRS-DMRS association table designed for the uplink PTRS port 0 in the current technology (PTRS-DMRS association for UL PTRS port 0).

**Table 24: PTRS-DMRS association for UL PTRS port 0**

| Value (row Index) | DMRS port |
|---|---|
| 0 | 1^{st} scheduled DMRS port (1^{st} scheduled DMRS port) |
| 1 | 2^{nd} scheduled DMRS port (2^{nd} scheduled DMRS port) |
| 2 | 3^{rd} scheduled DMRS port (3^{rd} scheduled DMRS port) |
| 3 | 4^{th} scheduled DMRS port (4^{th} scheduled DMRS port) |

It can be learned from Table 24 that the DMRS port associated with the row index 0 is the 1^{st} scheduled DMRS port, the DMRS port associated with the row index 1 is the 2^{nd} scheduled DMRS port, ..., and so on.

For example, one PTRS port, the port 0, is configured. When the PTRS-DMRS association is 00, it indicates that the PTRS port 0 is associated with the 1^{st} scheduled DMRS port; when the PTRS-DMRS association is 01, it indicates that the PTRS port 0 is associated with the 2^{nd} scheduled DMRS port; when the PTRS-DMRS association is 10, it indicates that the PTRS port 0 is associated with the 3^{rd} scheduled DMRS port; and when the PTRS-DMRS association is 11, it indicates that the PTRS port 0 is associated with the 4^{th} scheduled DMRS port.

Table 25 shows a PTRS-DMRS association table designed for the uplink PTRS port 0 and the uplink PTRS port 1 (PTRS-DMRS association for UL PTRS ports 0 and 1) in the current technology.

**Table 25: PTRS-DMRS association for UL PTRS ports 0 and 1**

| Value of MSB (most significant bit) | DMRS port | Value of LSB (least significant bit) | DMRS port |
|---|---|---|---|
| 0 | 1^{st} DMRS port sharing the PTRS port 0 (1^{st} DMRS port which shares PTRS port 0) | 0 | 1^{st} DMRS port sharing the PTRS port 1 (1^{st} DMRS port which shares PTRS port 1) |
| 1 | 2^{nd} DMRS port sharing the PTRS port 0 (2^{nd} DMRS port which shares PTRS port 0) | 1 | 2^{nd} DMRS port sharing the PTRS port 1 (2^{nd} DMRS port which shares PTRS port 1) |

For example, two PTRS ports: the port 0 and the port 1, are configured, and one PTRS port is bound to two DMRS ports (sequence numbers of the two DMRS ports are not limited). It can be learned from Table 25 that:
The most significant bit in the PTRS-DMRS association (for example, 2 bits) indicates a DMRS port associated with the PTRS port 0. For example, when the most significant bit is 0, it indicates that the DMRS port associated with the PTRS port 0 is the 1^{st} DMRS port sharing the PTRS port 0. For example, when the most significant bit is 1, it indicates that the DMRS port associated with the PTRS port 0 is the 2^{nd} DMRS port sharing the PTRS port 0.

The least significant bit in the PTRS-DMRS association (for example, 2 bits) indicates a DMRS port associated with the PTRS port 1. For example, when the least significant bit is 0, it indicates that the DMRS port associated with the PTRS port 1 is the 1^{st} DMRS port sharing the PTRS port 0. For example, when the least significant bit is 1, it indicates that the DMRS port associated with the PTRS port 1 is the 2^{nd} DMRS port sharing the PTRS port 0.

The 1^{st} DMRS port may also be referred to as a 1^{st} scheduled DMRS port, and the 2^{nd} DMRS port may also be referred to as a 2^{nd} scheduled DMRS port.

When the PTRS-DMRS association is 00, it indicates that the PTRS port 0 is associated with the 1^{st} DMRS port sharing the PTRS port 0, the PTRS port 1 is associated with the 1^{st} DMRS port sharing the PTRS port 1, ..., and so on. Details are not described.

In the current technology, the PTRS-DMRS association indicates, by using 2 bits, a maximum of four DMRS ports associated with the PTRS port. When transmission of more than four streams is supported in the uplink transmission, a quantity of DMRS ports that can be scheduled is greater than 4. If the field PTRS-DMRS association in the DCI still occupies 2 bits to indicate the DMRS port associated with the PTRS port, the DMRS port associated with the PTRS port cannot be clearly indicated.

Based on this, this embodiment provides a solution in which the network device indicates, to the terminal device, the DMRS port associated with the PTRS port.

### Example 1:

In a scenario in which one uplink PTRS port (for example, the PTRS port 0 or the PTRS port 1) is configured for the UE, DMRS ports associated with the uplink PTRS port may be indicated by 3 or more bits.

First, the network device determines row index information in a correspondence relationship.

The correspondence relationship indicates an association relationship between a row index and an m^{th} scheduled DMRS port, where m is an integer greater than or equal to 1.

The row index information indicates the DMRS port associated with the PTRS port. The row index information occupies n bits, and n is an integer greater than or equal to 3. For example, when n is 3, a value of m ranges from 1 to 8; when n is 4, a value of m ranges from 1 to 16; and when n is 5, a value of m ranges from 1 to 32.

Then, the network device sends the row index information in the correspondence relationship to the terminal device. Correspondingly, the terminal device receives the row index information in the correspondence relationship from the network device.

For example, the row index information is included in a field PTRS-DMRS association of downlink control information DCI.

Next, the terminal device determines, based on the row index information and the correspondence relationship, the DMRS port associated with the PTRS port. To be specific, the terminal device determines the m^{th} scheduled DMRS port associated with the row index information as the DMRS port associated with the PTRS port.

For example, the correspondence relationship maintained by the terminal device and the network device includes one or more of the following items.

For ease of description, the correspondence relationships are numbered, for example, 21.1, 21.2, 21.3, 21.4, ..., and the like. These numbers are merely used for ease of description, and are not used to limit a sequence, a time sequence, a priority, or an importance degree of the plurality of correspondence relationships. In addition, values 0, 1, 2, ..., and the like of the row indices in the correspondence relationships each are merely a number of a row. These numbers are merely for ease of description, are merely examples, and are not used to limit a sequence, a time sequence, a priority, or an importance degree of the plurality of row indices. During actual application, the row index may also have another value.

In the correspondence relationship 21.1, the row index is 0, and the DMRS port is a 1^{st} scheduled DMRS port (1^{st} scheduled DMRS port).

In the correspondence relationship 21.2, the row index is 1, and the DMRS port is a 2^{nd} scheduled DMRS port (2^{nd} scheduled DMRS port).

In the correspondence relationship 21.3, the row index is 2, and the DMRS port is a 3^{rd} scheduled DMRS port (3^{rd} scheduled DMRS port).

In the correspondence relationship 21.4, the row index is 3, and the DMRS port is a 4^{th} scheduled DMRS port (4^{th} scheduled DMRS port).

In the correspondence relationship 21.5, the row index is 4, and the DMRS port is a 5^{th} scheduled DMRS port (5^{th} scheduled DMRS port).

In the correspondence relationship 21.6, the row index is 5, and the DMRS port is a 6^{th} scheduled DMRS port (6^{th} scheduled DMRS port).

In the correspondence relationship 21.7, the row index is 6, and the DMRS port is a 7^{th} scheduled DMRS port (7^{th} scheduled DMRS port).

In the correspondence relationship 21.8, the row index is 7, and the DMRS port is an 8^{th} scheduled DMRS port (8^{th} scheduled DMRS port).

Any one of the correspondence relationships 21.1 to 21.8 may be a correspondence relationship in a table. Table 26 shows an example of a PTRS-DMRS association table designed for the uplink PTRS port according to this embodiment of this application.

**Table 26: PTRS-DMRS association for UL PTRS port**

| Row index (Value) | DMRS port |
|---|---|
| 0 | 1^{st} scheduled DMRS port (1^{st} scheduled DMRS port) |
| 1 | 2^{nd} scheduled DMRS port (2^{nd} scheduled DMRS port) |
| 2 | 3^{rd} scheduled DMRS port (3^{rd} scheduled DMRS port) |
| 3 | 4^{th} scheduled DMRS port (4^{th} scheduled DMRS port) |
| 4 | 5^{th} scheduled DMRS port (5^{th} scheduled DMRS port) |
| 5 | 6^{th} scheduled DMRS port (6^{th} scheduled DMRS port) |
| 6 | 7^{th} scheduled DMRS port (7^{th} scheduled DMRS port) |
| 7 | 8^{th} scheduled DMRS port (8^{th} scheduled DMRS port) |

### Example 2:

In a scenario in which one uplink PTRS port (for example, the PTRS port 0 or the PTRS port 1) is configured for the UE, DMRS ports associated with the uplink PTRS port may be jointly indicated by 2 bits and another parameter (for example, a modulation order).

One codeword supports a maximum of four streams. When there are more than four streams (more than four DMRS ports can be scheduled), two codewords are needed. A codeword 0 (codeword 0) may correspond to a maximum of four DMRS ports, and a codeword 1 may correspond to a maximum of four DMRS ports. One row index may be associated with an m^{th} scheduled DMRS port corresponding to each of the two codewords.

First, the network device determines row index information in a correspondence relationship.

The correspondence relationship indicates an association relationship between a row index and a plurality of m^{th} scheduled DMRS ports, where the plurality of m^{th} scheduled DMRS ports are associated with different codewords, and m is an integer greater than or equal to 1. For example, there are two DMRS ports, and the two DMRS ports are associated with two different codewords, for example, the codeword 0 and the codeword 1.

The row index information indicates a plurality of DMRS ports associated with the PTRS port, and the plurality of DMRS ports are associated with different codewords. The row index information occupies n bits, and n is an integer greater than or equal to 2.

Then, the network device sends the row index information in the correspondence relationship to the terminal device. Correspondingly, the terminal device receives the row index information in the correspondence relationship from the network device.

For example, the row index information is included in a field PTRS-DMRS association of downlink control information DCI.

Next, the terminal device determines, based on the row index information and the correspondence relationship, the plurality of DMRS ports associated with the PTRS port. The plurality of DMRS ports are associated with different codewords. To be specific, the terminal device determines the plurality of m^{th} scheduled DMRS ports associated with the row index information as the plurality of DMRS ports associated with the PTRS port.

Then, the terminal device may determine, in the plurality of DMRS ports based on a modulation order corresponding to each DMRS port (namely, a modulation order corresponding to each codeword), DMRS port(s) associated with the PTRS.

The two codewords usually correspond to different modulation orders, and the terminal device may use DMRS port(s) with a higher modulation order as the DMRS port(s) associated with the PTRS port. If the modulation orders are the same, the m^{th} DMRS port associated with the codeword 0 may be used as the DMRS port(s) associated with the PTRS port by default.

For example, the correspondence relationship maintained by the terminal device and the network device includes one or more of the following items.

For ease of description, the correspondence relationships are numbered, for example, 22.1, 22.2, 22.3, 22.4, ..., and the like. These numbers are merely used for ease of description, and are not used to limit a sequence, a time sequence, a priority, or an importance degree of the plurality of correspondence relationships. In addition, values 0, 1, 2, ..., and the like of the row indices in the correspondence relationships each are merely a number of a row. These numbers are merely for ease of description, are merely examples, and are not used to limit a sequence, a time sequence, a priority, or an importance degree of the plurality of row indices. During actual application, the row index may also have another value.

In the correspondence relationship 22.1, the row index is 0, and the DMRS port is a 1^{st} scheduled DMRS port (1^{st} scheduled DMRS port), which is specifically a 1^{st} scheduled DMRS port in DMRS ports corresponding to the codeword 0 or a 1^{st} scheduled DMRS port in DMRS ports corresponding to the codeword 1.

In the correspondence relationship 22.2, the row index is 1, and the DMRS port is a 2^{nd} scheduled DMRS port (2^{nd} scheduled DMRS port), which is specifically a 2^{nd} scheduled DMRS port in DMRS ports corresponding to the codeword 0 or a 2^{nd} scheduled DMRS port in DMRS ports corresponding to the codeword 1.

In the correspondence relationship 22.3, the row index is 2, and the DMRS port is a 3^{rd} scheduled DMRS port (3^{rd} scheduled DMRS port), which is specifically a 3^{rd} scheduled DMRS port in DMRS ports corresponding to the codeword 0 or a 3^{rd} scheduled DMRS port in DMRS ports corresponding to the codeword 1.

In the correspondence relationship 22.4, the row index is 3, and the DMRS port is a 4^{th} scheduled DMRS port (4^{th} scheduled DMRS port), which is specifically a 4^{th} scheduled DMRS port in DMRS ports corresponding to the codeword 0 or a 4^{th} scheduled DMRS port in DMRS ports corresponding to the codeword 1.

Any one of the correspondence relationships 22.1 to 22.4 may be a correspondence relationship in a table. Table 27 shows an example of a PTRS-DMRS association table designed for the uplink PTRS port according to this embodiment of this application.

**Table 27: PTRS-DMRS association for UL PTRS port**

| Row index (Value) | DMRS port |
|---|---|
| 0 | 1^{st} scheduled DMRS port corresponding to the codeword 0 (1^{st} scheduled DMRS port with codeword 0)/ 1^{st} scheduled DMRS port corresponding to the codeword 1 (1^{st} scheduled DMRS port with codeword 1) |
| 1 | 2^{nd} scheduled DMRS port with codeword 0/ 2^{nd} scheduled DMRS port with codeword 1 |
| 2 | 3^{rd} scheduled DMRS port with codeword 0/ 3^{rd} scheduled DMRS port with codeword 1 |
| 3 | 4^{th} scheduled DMRS port with codeword 0/ 4^{th} scheduled DMRS port with codeword 1 |

In addition, the 1st scheduled DMRS port with codeword 0/1nd scheduled DMRS port with codeword 1 may be simplified as a 1nd scheduled DMRS port, the 2nd scheduled DMRS port with codeword 0/2nd scheduled DMRS port with codeword 1 may be simplified as a 2nd scheduled DMRS port, the 3rd scheduled DMRS port with codeword 0/3rd scheduled DMRS port with codeword 1 may be simplified as a 3nd scheduled DMRS port, and the 4nd scheduled DMRS port with codeword 0/4th scheduled DMRS port with codeword 1 may be simplified as a 4th scheduled DMRS port.

### Example 3:

In a scenario in which two uplink PTRS ports (for example, the PTRS port 0 and the PTRS port 1) are configured for the UE, a DMRS port associated with each of the two uplink PTRS ports may be indicated by 4 or more bits.

First, the network device determines indication information. The indication information indicates a DMRS port associated with each of a plurality of PTRS ports.

Then, the network device sends the indication information to the terminal device. Correspondingly, the terminal device receives the indication information from the network device.

Next, the terminal device determines, based on the indication information, the DMRS port associated with each of the plurality of PTRS ports.

Specifically, the indication information indicates that the DMRS port associated with each of the plurality of PTRS ports is an m^{th} DMRS port that shares the PTRS port, and a value of m is an integer greater than or equal to 1.

The indication information occupies n bits, and n is an integer greater than or equal to 4.

The indication information is a field PTRS-DMRS association of DCI.

In a specific example, the plurality of PTRS ports are two PTRS ports, the indication information occupies 4 bits, and every 2 bits indicate a DMRS port associated with one PTRS port.

For example, the two PTRS ports include the PTRS port 0 and the PTRS port 1. Two most significant bits in the 4 bits indicate a DMRS port associated with the PTRS port 0, and two least significant bits in the 4 bits indicate a DMRS port associated with the PTRS port 1. Alternatively, two most significant bits in the 4 bits indicate a DMRS port associated with the PTRS port 1, and two least significant bits in the 4 bits indicate a DMRS port associated with the PTRS port 0.

Table 28 shows a PTRS-DMRS association table designed for the uplink PTRS port 0 and the uplink PTRS port 1 (PTRS-DMRS association for UL PTRS ports 0 and 1) in this application.

**Table 28: PTRS-DMRS association for UL PTRS ports 0 and 1**

| Value of the most significant bits (Value of MSB) | DMRS port | Value of the least significant bits (Value of LSB) | DMRS port |
|---|---|---|---|
| 00 | 1^{st} DMRS port sharing the PTRS port 0 (1^{st} DMRS port which shares PTRS port 0) | 00 | 1^{st} DMRS port sharing the PTRS port 1 (1^{st} DMRS port which shares PTRS port 1) |
| 01 | 2^{nd} DMRS port sharing the PTRS port 0 (2^{nd} DMRS port which shares PTRS port 0) | 01 | 2^{nd} DMRS port sharing the PTRS port 1 (2^{nd} DMRS port which shares PTRS port 1) |
| 10 | 3^{rd} DMRS port sharing the PTRS port 0 (3^{rd} DMRS port which shares PTRS port 0) | 10 | 3^{rd} DMRS port sharing the PTRS port 1 (3^{rd} DMRS port which shares PTRS port 1) |
| 11 | 4^{th} DMRS port sharing the PTRS port 0 (4^{th} DMRS port which shares PTRS port 0) | 11 | 4^{th} DMRS port sharing the PTRS port 1 (4^{th} DMRS port which shares PTRS port 1) |

For example, two PTRS ports: the port 0 and the port 1, are configured, and one PTRS port is bound to four DMRS ports (sequence numbers of the four DMRS ports are not limited). It can be learned from Table 28 that:
The two most significant bits in the indication information (for example, the PTRS-DMRS association) (for example, 4 bits) indicate a DMRS port associated with the PTRS port 0. For example, when the most significant bits are 00, it indicates that the DMRS port associated with the PTRS port 0 is the 1^{st} DMRS port sharing the PTRS port 0. For example, when the most significant bits are 01, it indicates that the DMRS port associated with the PTRS port 0 is the 2^{nd} DMRS port sharing the PTRS port 0. For example, when the most significant bits are 10, it indicates that the DMRS port associated with the PTRS port 0 is the 3^{rd} DMRS port sharing the PTRS port 0. For example, when the most significant bits are 11, it indicates that the DMRS port associated with the PTRS port 0 is the 4^{th} DMRS port sharing the PTRS port 0.

The two least significant bits in the indication information (for example, the PTRS-DMRS association) (for example, 4 bits) indicate a DMRS port associated with the PTRS port 1. For example, when the least significant bits are 00, it indicates that the DMRS port associated with the PTRS port 1 is the 1^{st} DMRS port sharing the PTRS port 1. For example, when the least significant bits are 01, it indicates that the DMRS port associated with the PTRS port 1 is the 2^{nd} DMRS port sharing the PTRS port 1. For example, when the least significant bits are 10, it indicates that the DMRS port associated with the PTRS port 1 is the 3^{rd} DMRS port sharing the PTRS port 1. For example, when the least significant bits are 11, it indicates that the DMRS port associated with the PTRS port 1 is the 4^{th} DMRS port sharing the PTRS port 1.

The 1^{st} DMRS port may also be referred to as a 1^{st} scheduled DMRS port, the 2^{nd} DMRS port may also be referred to as a 2^{nd} scheduled DMRS port, the 3^{rd} DMRS port may also be referred to as a 3^{rd} scheduled DMRS port, and the 4^{th} DMRS port may also be referred to as a 4^{th} scheduled DMRS port.

It may be understood that, the foregoing meanings represented by the values of the two most significant bits or the two least significant bits are merely examples, and should not constitute a limitation on the solution.

### Example 4:

In a scenario in which four uplink PTRS ports (for example, a PTRS port 0, a PTRS port 1, a PTRS port 2, and a PTRS port 3) are configured for the UE, a DMRS port associated with each of the two uplink PTRS ports may be indicated by 4 or more bits.

First, the network device determines indication information. The indication information indicates a DMRS port associated with each of a plurality of PTRS ports.

Then, the network device sends the indication information to the terminal device. Correspondingly, the terminal device receives the indication information from the network device.

Next, the terminal device determines, based on the indication information, the DMRS port associated with each of the plurality of PTRS ports.

Specifically, the indication information indicates that the DMRS port associated with each of the plurality of PTRS ports is an m^{th} DMRS port that shares the PTRS port, and a value of m is an integer greater than or equal to 1.

The indication information occupies n bits, and n is an integer greater than or equal to 4.

The indication information is a field PTRS-DMRS association of DCI.

In a specific example, the plurality of PTRS ports are four PTRS ports, the indication information occupies 4 bits, and every bit indicates a DMRS port associated with one PTRS port.

For example, the four PTRS ports include the PTRS port 0, the PTRS port 1, the PTRS port 2, and the PTRS port 3. 4 bits (for example, referred to as a most significant bit, a second most significant bit, a second least significant bit, and a least significant bit) in an order from the most significant bit to the least significant bit respectively indicate a DMRS port associated with the PTRS port 0, a DMRS port associated with the PTRS port 1, a DMRS port associated with the PTRS port 2, and a DMRS port associated with the PTRS port 3. Alternatively, 4 bits (for example, referred to as a least significant bit, a second least significant bit, a second most significant bit, and a most significant bit) in an order from the least significant bit to the most significant bit respectively indicate a DMRS port associated with the PTRS port 0, a DMRS port associated with the PTRS port 1, a DMRS port associated with the PTRS port 2, and a DMRS port associated with the PTRS port 3. A specific bit in the 4 bits is not specifically limited to indicate a DMRS port associated with a specific PTRS port.

Table 29 shows a PTRS-DMRS association table designed for the uplink PTRS port 0, the uplink PTRS port 1, the uplink PTRS port 2, and the uplink PTRS port 3 (PTRS-DMRS association for UL PTRS ports 0, 1, 2, and 3) in this application.

**Table 29: PTRS-DMRS association for UL PTRS ports 0, 1, 2, and 3**

| Value of the most significant bit (Value) | DMRS port | Value of the second most significant bit (Value) | DMRS port |
|---|---|---|---|
| 0 | 1^{st} DMRS port sharing the PTRS port 0 (1^{st} DMRS port which shares PTRS port 0) | 0 | 1^{st} DMRS port sharing the PTRS port 1 (1^{st} DMRS port which shares PTRS port 1) |
| 1 | 2^{nd} DMRS port sharing the PTRS port 0 (2^{nd} DMRS port which shares PTRS port 0) | 1 | 2^{nd} DMRS port sharing the PTRS port 1 (2^{nd} DMRS port which shares PTRS port 1) |
| Value of the second least significant bit (Value) | DMRS port | Value of the least significant bit (Value) | DMRS port |
| 0 | 1^{st} DMRS port sharing the PTRS port 2 (1^{st} DMRS port which shares PTRS port 2) | 0 | 1^{st} DMRS port sharing the PTRS port 3 (1^{st} DMRS port which shares PTRS port 3) |
| 1 | 2^{nd} DMRS port sharing the PTRS port 2 (2^{nd} DMRS port which shares PTRS port 2) | 1 | 2^{nd} DMRS port sharing the PTRS port 3 (2^{nd} DMRS port which shares PTRS port 3) |

For example, four PTRS ports: the PTRS port 0, the PTRS port 1, the PTRS port 2, and the PTRS port 3, are configured, and one PTRS port is bound to two DMRS ports (sequence numbers of the two DMRS ports are not limited). It can be learned from Table 29 that:
The most significant bit in the indication information (for example, the PTRS-DMRS association) (for example, 4 bits) indicates a DMRS port associated with the PTRS port 0. For example, when the most significant bit is 0, it indicates that the DMRS port associated with the PTRS port 0 is the 1^{st} DMRS port sharing the PTRS port 0. For example, when the most significant bit is 1, it indicates that the DMRS port associated with the PTRS port 0 is the 2^{nd} DMRS port sharing the PTRS port 0.

The second most significant bit in the indication information (for example, the PTRS-DMRS association) (for example, 4 bits) indicates a DMRS port associated with the PTRS port 1. For example, when the least significant bit is 0, it indicates that the DMRS port associated with the PTRS port 1 is the 1^{st} DMRS port sharing the PTRS port 1. For example, when the least significant bit is 1, it indicates that the DMRS port associated with the PTRS port 1 is the 2^{nd} DMRS port sharing the PTRS port 1.

The second least significant bit in the indication information (for example, the PTRS-DMRS association) (for example, 4 bits) indicates a DMRS port associated with the PTRS port 2. For example, when the most significant bit is 0, it indicates that the DMRS port associated with the PTRS port 2 is the 1^{st} DMRS port sharing the PTRS port 2. For example, when the least significant bit is 1, it indicates that the DMRS port associated with the PTRS port 2 is the 2^{nd} DMRS port sharing the PTRS port 2.

The least significant bit in the indication information (for example, the PTRS-DMRS association) (for example, 4 bits) indicates a DMRS port associated with the PTRS port 3. For example, when the least significant bit is 0, it indicates that the DMRS port associated with the PTRS port 3 is the 1^{st} DMRS port sharing the PTRS port 3. For example, when the second least significant bit is 1, it indicates that the DMRS port associated with the PTRS port 3 is the 2^{nd} DMRS port sharing the PTRS port 3.

It may be understood that, the foregoing meanings represented by the values of each bit are merely examples, and should not constitute a limitation on the solution.

The foregoing describes the method in embodiments of this application, and the following describes an apparatus in embodiments of this application. The method and the apparatus are based on a same technical idea. The method and the apparatus have similar principles for resolving problems. Therefore, for implementations of the apparatus and the method, refer to each other. Details are not repeated herein.

In embodiments of this application, the apparatus may be divided into functional modules based on the foregoing method examples. For example, the apparatus may be divided into functional modules corresponding to functions, or two or more functions may be integrated into one module. These modules may be implemented in a form of hardware, or may be implemented in a form of a software functional module. It should be noted that, in embodiments of this application, module division is an example, and is merely a logical function division. During specific implementation, another division manner may be used.

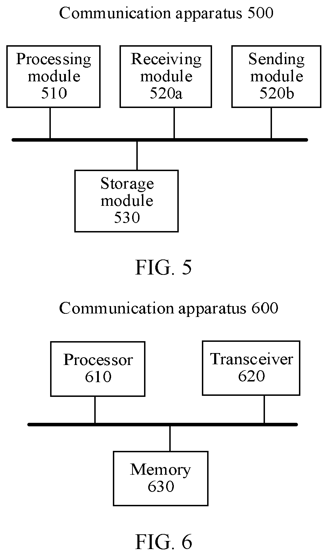

Based on the same technical idea as the foregoing method, FIG. 5 is a diagram of a structure of a communication apparatus 500. The communication apparatus 500 may include at least one of the following: a processing module 510, a receiving module 520a, a sending module 520b, and a storage module 530. The processing module 510 may be separately connected to the storage module 530, the receiving module 520a, and the sending module 520b. The storage module 530 may also be connected to the receiving module 520a and the sending module 520b.

In an example, the receiving module 520a and the sending module 520b may alternatively be integrated together and defined as a transceiver module.

In an example, the communication apparatus 500 may be a network device, or may be a chip or a functional unit used in the network device. The communication apparatus 500 has any function of the network device in the foregoing method. For example, the communication apparatus 500 can perform the steps performed by the network device in the methods in FIG. 3 and FIG. 4.

The receiving module 520a may perform a receiving action performed by the network device in the foregoing method embodiment.

The sending module 520b may perform a sending action performed by the network device in the foregoing method embodiment.

The processing module 510 may perform another action other than the sending action and the receiving action in the actions performed by the network device in the foregoing method embodiment.

In an example, the processing module 510 is configured to generate first information and second information. The sending module 520b is configured to send the first information and the second information to a terminal device. The first information indicates one or more reference port indices. The second information indicates that a first set is used as target port indices, or the second information indicates that a part of port indices in the first set are used as target port index (indices). The first set includes the one or more reference port indices and port indices obtained by adding X to each of the reference port indices, and X is an integer greater than or equal to 4. The target port index indicates a port used for a reference signal.

In an example, the reference port index (indices) and the reference port index (indices)+X are in a same code division multiplexing CDM group.

In an example, when the second information indicates that the first set is used as the target port indices, a quantity of the reference port indices is less than or equal to 2.

In an example, when the second information indicates that the part of the port indices in the first set are used as the target port index (indices), a quantity of the reference port indices is equal to 2.

In an example, the first information includes row index information in a correspondence relationship, and the correspondence relationship indicates an association relationship between a row index and one or more port indices.

In an example, in the correspondence relationship, the row index is a first value, and the plurality of port indices include 7, 9, and 19; or in the correspondence relationship, the row index is a second value, and the plurality of port indices include 11, 21, and 23.

In an example, when the reference port indices indicated by the first information include 0, 1, and 2, the second information indicates that the port indices 0, 1, and 0+X are used as the target port indices, or the port indices 2, 1+X, and 2+X are used as the target port indices; or when the reference port indices indicated by the first information include 0, 1, and 2, the second information indicates that the port indices 0, 1, and 1+X are used as the target port indices, or the port indices 2, 0+X, and 2+X are used as the target port indices.

In an example, the first information includes a row index 20.

In an example, when the reference port indices indicated by the first information include 3, 4, and 5, the second information indicates that the port indices 4, 5, and 4+X are used as the target port indices, or the port indices 3, 3+X, and 5+X are used as the target port indices; or when the reference port indices indicated by the first information include 3, 4, and 5, the second information indicates that the port indices 4, 5, and 5+X are used as the target port indices, or the port indices 3, 3+X, and 4+X are used as the target port indices.

In an example, the first information includes a row index 21.

In an example, the first information is carried in downlink control information DCI.

In an example, the second information is carried in downlink control information DCI, or is carried in radio resource control RRC.

In an example, X=4, or X=6, or X=8, or X=12.

In an example, the sending module 520b is further configured to send a third indication to the terminal device. The third indication indicates that a plurality of target port indices are associated with one codeword.

In an example, the storage module 530 may store computer-executable instructions of the method performed by the network device, so that the processing module 510, the receiving module 520a, and the sending module 520b perform the method performed by the network device in the foregoing example.

For example, the storage module may include one or more memories. The memory may be a component configured to store a program or data in one or more devices or circuits. The storage module may be a register, a cache, a RAM, or the like. The storage module may be integrated with the processing module. The storage module may be a ROM or another type of static storage device that can store static information and instructions. The storage module may be independent of the processing module.

The transceiver module may be an input/output interface, a pin, a circuit, or the like.

In an example, the processing module 510 is configured to determine row index information in a correspondence relationship. The sending module 520b is configured to send the row index information in the correspondence relationship to a terminal device. The correspondence relationship indicates an association relationship between a row index and a plurality of port indices. The plurality of port indices associated with the row index information indicate ports used for a reference signal. For example, in the correspondence relationship, the row index is a first value, and the port indices include 7, 9, and 19. For another example, in the correspondence relationship, the row index is a second value, and the port indices include 11, 21, and 23.

In an example, the correspondence relationship may further include one or more of the following information: a quantity of DMRS CDM groups without data (a quantity of CDM groups for short), a quantity of codewords, a DMRS type, a maximum length (the maximum length indicates a maximum quantity of front-load symbols of a DMRS), and a quantity of front-load symbols.

In an example, the correspondence relationship in which the row index is the first value and the port indices include 7, 9, and 19 may further include one or more of the following information: the quantity of CDM groups being 3, the quantity of codewords being 1, the quantity of front-load symbols being 2, the DMRS type being 2, and the maximum length being 2.

In an example, the correspondence relationship in which the row index is the second value and the port indices include 11, 21, and 23 may further include one or more of the following information: the quantity of CDM groups being 3, the quantity of codewords being 1, the quantity of front-load symbols being 2, the DMRS type being 2, and the maximum length being 2.

In an example, the communication apparatus 500 may be a terminal device, or may be a chip or a functional unit used in the terminal device. The communication apparatus 500 has any function of the terminal device in the foregoing method. For example, the communication apparatus 500 can perform the steps performed by the terminal device in the methods in FIG. 3 and FIG. 4.

The receiving module 520a may perform a receiving action performed by the terminal device in the foregoing method embodiment.

The sending module 520b may perform a sending action performed by the terminal device in the foregoing method embodiment.

The processing module 510 may perform another action other than the sending action and the receiving action in the actions performed by the terminal device in the foregoing method embodiment.

In an example, the receiving module 520a is configured to receive first information and second information. The first information indicates one or more reference port indices. The second information indicates that a first set is used as target port indices, or the second information indicates that a part of port indices in the first set are used as target port index (indices). The first set includes the one or more reference port indices and a port index obtained by adding X to each of the reference port indices, and X is an integer greater than or equal to 4. The target port index indicates a port used for a reference signal. The processing module 510 is configured to determine a plurality of target port indices based on the first information and the second information.

In an example, the reference port index and the reference port index+X are in a same code division multiplexing CDM group.

In an example, when the second information indicates that the first set is used as the target port indices, a quantity of the reference port indices is less than or equal to 2.

In an example, when the second information indicates that the part of the port indices in the first set are used as the target port index (indices), a quantity of the reference port indices is equal to 2.

In an example, the first information includes row index information in a correspondence relationship, and the correspondence relationship indicates an association relationship between a row index and one or more port indices.

In an example, in the correspondence relationship, the row index is a first value, and the plurality of port indices include 7, 9, and 19; or in the correspondence relationship, the row index is a second value, and the plurality of port indices include 11, 21, and 23.

In an example, when the reference port indices indicated by the first information include 0, 1, and 2, the second information indicates that the port indices 0, 1, and 0+X are used as the target port indices, or the port indices 2, 1+X, and 2+X are used as the target port indices; or when the reference port indices indicated by the first information include 0, 1, and 2, the second information indicates that the port indices 0, 1, and 1+X are used as the target port indices, or the port indices 2, 0+X, and 2+X are used as the target port indices.

In an example, the first information includes a row index 20.

In an example, when the reference port indices indicated by the first information include 3, 4, and 5, the second information indicates that the port indices 4, 5, and 4+X are used as the target port indices, or the port indices 3, 3+X, and 5+X are used as the target port indices; or when the reference port indices indicated by the first information include 3, 4, and 5, the second information indicates that the port indices 4, 5, and 5+X are used as the target port indices, or the port indices 3, 3+X, and 4+X are used as the target port indices.

In an example, the first information includes a row index 21.

In an example, the first information is carried in downlink control information DCI.

In an example, the second information is carried in downlink control information DCI, or is carried in radio resource control RRC.

In an example, X=4, or X=6, or X=8, or X=12.

In an example, the receiving module 520a is further configured to receive a third indication from the network device. The third indication indicates that the plurality of target port indices are associated with one codeword.

In an example, the receiving module 520a is configured to receive row index information in a correspondence relationship from a network device. The processing module 510 is configured to determine a plurality of port indices (namely, a plurality of target port indices) based on the row index information and the correspondence relationship.

In an example, in the correspondence relationship, the row index is a first value, and the port indices include 7, 9, and 19. For another example, in the correspondence relationship, the row index is a second value, and the port indices include 11, 21, and 23.

In an example, the correspondence relationship may further include one or more of the following information: a quantity of DMRS CDM groups without data (a quantity of CDM groups for short), a quantity of codewords, a DMRS type, a maximum length (the maximum length indicates a maximum quantity of front-load symbols of a DMRS), and a quantity of front-load symbols.

In an example, the correspondence relationship in which the row index is the first value and the port indices include 7, 9, and 19 may further include one or more of the following information: the quantity of CDM groups being 3, the quantity of codewords being 1, the quantity of front-load symbols being 2, the DMRS type being 2, and the maximum length being 2.

In an example, the correspondence relationship in which the row index is the second value and the port indices include 11, 21, and 23 may further include one or more of the following information: the quantity of CDM groups being 3, the quantity of codewords being 1, the quantity of front-load symbols being 2, the DMRS type being 2, and the maximum length being 2.

In an example, the storage module 530 may store computer-executable instructions of the method performed by the terminal device, so that the processing module 510, the receiving module 520a, and the sending module 520b perform the method performed by the terminal device in the foregoing example.

For example, the storage module may include one or more memories. The memory may be a component configured to store a program or data in one or more devices or circuits. The storage module may be a register, a cache, a RAM, or the like. The storage module may be integrated with the processing module. The storage module may be a ROM or another type of static storage device that can store static information and instructions. The storage module may be independent of the processing module.

The transceiver module may be an input/output interface, a pin, a circuit, or the like.

In a possible product form, the apparatus may be implemented by using a general bus architecture.

FIG. 6 is a block diagram of a communication apparatus 600.

The communication apparatus 600 may include at least one of the following: a processor 610, a transceiver 620, and a memory 630. The transceiver 620 may be configured to: receive a program or instructions, and transmit the program or the instructions to the processor 610. Alternatively, the transceiver 620 may be used by the communication apparatus 600 to communicate and interact with another communication device, for example, exchange control signaling and/or service data. The transceiver 620 may be a code and/or data read/write transceiver, or the transceiver 620 may be a signal transmission transceiver between the processor and a transceiver machine. The processor 610 and the memory 630 are electrically coupled.

In an example, the communication apparatus 600 may be a network device, or may be a chip used in the network device. It should be understood that the apparatus has any function of the network device in the foregoing method. For example, the communication apparatus 600 can perform the steps performed by the network device in the methods in FIG. 3 and FIG. 4. For example, the memory 630 is configured to store a computer program. The processor 610 may be configured to invoke the computer program or instructions stored in the memory 630, to perform the method performed by the network device in the foregoing example, or perform, via the transceiver 620, the method performed by the network device in the foregoing example.

In an example, the communication apparatus 600 may be a terminal device, or may be a chip used in the terminal device. It should be understood that the apparatus has any function of the terminal device in the foregoing method. For example, the communication apparatus 600 can perform the steps performed by the terminal device in the methods in FIG. 3 and FIG. 4. For example, the memory 630 is configured to store a computer program. The processor 610 may be configured to invoke the computer program or instructions stored in the memory 630, to perform the method performed by the terminal device in the foregoing example, or perform, via the transceiver 620, the method performed by the terminal device in the foregoing example.

The processing module 510 in FIG. 5 may be implemented by using the processor 610.

The receiving module 520a and the sending module 520b in FIG. 5 may be implemented by using the transceiver 620. Alternatively, the transceiver 620 includes a receiver and a transmitter. The receiver performs a function of the receiving module, and the transmitter performs a function of the sending module.

The storage module 530 in FIG. 5 may be implemented by using the memory 630.

In a possible product form, the apparatus may be implemented by a general-purpose processor (the general-purpose processor may also be referred to as a chip or a chip system).

In a possible implementation, a general-purpose processor that implements an apparatus used in a terminal device or an apparatus used in a network device includes a processing circuit (where the processing circuit may also be referred to as a processor), and optionally, further includes an input/output interface and a storage medium (where the storage medium may also be referred to as a memory) that are connected to and communicate with the processing circuit. The storage medium is configured to store instructions executed by the processing circuit, to perform the method performed by the network device or the terminal device in the foregoing example.

The processing module 510 in FIG. 5 may be implemented by using the processing circuit.

The receiving module 520a and the sending module 520b in FIG. 5 may be implemented by using the input/output interface. Alternatively, the input/output interface includes an input interface and an output interface. The input interface performs a function of the receiving module, and the output interface performs a function of the sending module.

The storage module 530 in FIG. 5 may be implemented by using the storage medium.

In a possible product form, the apparatus in embodiments of this application may be further implemented by using the following: one or more FPGAs (field programmable gate arrays), a PLD (programmable logic device), a controller, a state machine, gate logic, a discrete hardware component, any other proper circuit, or any combination of circuits that can perform various functions described in this application.

An embodiment of this application further provides a computer-readable storage medium, storing a computer program. When the computer program is executed by a computer, the computer may be enabled to perform the foregoing reference signal port indication method. In other words, the computer program includes instructions used to implement the reference signal port indication method.

An embodiment of this application further provides a computer program product, including computer program code. When the computer program code is run on a computer, the computer is enabled to perform the foregoing reference signal port indication method.

An embodiment of this application further provides a communication system. The communication system includes a network device and a terminal device that perform the foregoing reference signal port indication method.

In addition, the processor mentioned in embodiments of this application may be a central processing unit (central processing unit, CPU) or a baseband processor. The baseband processor and the CPU may be integrated or separated. Alternatively, the processor may be a network processor (network processor, NP) or a combination of the CPU and the NP. The processor may further include a hardware chip or another general-purpose processor. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field programmable gate array (field programmable gate array, FPGA), a generic array logic (generic array logic, GAL) and another programmable logic device, a discrete gate or a transistor logic device, a discrete hardware component, or the like, or any combination thereof. The general-purpose processor may be a microprocessor, or the processor may be any conventional processor or the like.

The memory mentioned in embodiments of this application may be a volatile memory or a non-volatile memory, or may include the volatile memory and the non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache. Through example but not limitative descriptions, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM). It should be noted that the memory described in this application aims to include but is not limited to these memories and any memory of another proper type.

The transceiver mentioned in embodiments of this application may include a separate transmitter and/or a separate receiver, or the transmitter and the receiver may be integrated. The transceiver may operate according to an indication of a corresponding processor. Optionally, the transmitter may correspond to a transmitter machine in a physical device, and the receiver may correspond to a receiver machine in the physical device.

Persons of ordinary skill in the art may be aware that, in combination with the examples described in embodiments disclosed in this specification, method steps and units may be implemented by electronic hardware, computer software, or a combination thereof. To clearly describe the interchangeability between the hardware and the software, the foregoing has generally described steps and compositions of embodiments based on functions. Whether the functions are performed by hardware or software depends on particular applications and design constraint conditions of the technical solutions. Persons of ordinary skill in the art may use different methods to implement the described functions for each particular application, but it should not be considered that the implementation goes beyond the scope of this application.

In the several embodiments provided in this application, it should be understood that the disclosed system, apparatus, and method may be implemented in other manners. For example, the described apparatus embodiments are merely examples. For example, the unit division is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces, indirect couplings or communication connections between the apparatuses or units, or electrical connections, mechanical connections, or connections in other forms.

The units described as separate parts may or may not be physically separate, and parts displayed as units may or may not be physical units, may be located in one place, or may be distributed on a plurality of network units. Some or all of the units may be selected based on actual requirements to achieve the objectives of the solutions in embodiments of this application.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions in this application essentially, or the part contributing to the existing technology, or all or some of the technical solutions may be represented in a form of a software product. The computer software product is stored in a storage medium and includes several instructions for instructing a computer device (which may be a personal computer, a server, a network device, or the like) to perform all or a part of the steps of the methods described in embodiments of this application. The foregoing storage medium includes: any medium that can store program code, such as a USB flash drive, a removable hard disk drive, a read-only memory (read-only memory, ROM), a random access memory (random access memory, RAM), a magnetic disk, or an optical disc.

The term "and/or" in this application describes an association relationship for describing associated objects and represents that three relationships may exist. For example, A and/or B may represent the following three cases: Only A exists, both A and B exist, and only B exists. The character "/" usually indicates an "or" relationship between the associated objects. "A plurality of" in this application means two or more. In addition, it should be understood that in the descriptions of this application, terms such as "first" and "second" are merely used for distinguishing and description, but should not be understood as indicating or implying relative importance, or should not be understood as indicating or implying a sequence.

Although exemplary embodiments of this application are described, persons skilled in the art may make changes and modifications to these embodiments once they learn of the basic inventive concept. Therefore, the following claims are intended to be construed as to cover the preferred embodiments and all changes and modifications falling within the scope of this application.

It is clear that persons skilled in the art can make various modifications and variations to embodiments of this application without departing from the scope of embodiments of this application. In this way, this application is intended to cover these modifications and variations to embodiments of this application provided that they fall within the scope of protection defined by the following claims and their equivalent technologies of this application.

## Claims

1. A reference signal port indication method, applied to a network device, and comprising:
generating first information and second information; and
sending the first information and the second information to a terminal device, wherein
the first information indicates one or more reference port indices; the second information indicates that a first set is used as target port indices, or the second information indicates that a part of port indices in the first set are used as one or more target port indices; the first set comprises the one or more reference port indices and one or more port indices obtained by adding X to each of the one or more reference port indices; X is an integer greater than or equal to 4; and the one or more target port indices indicate one or more ports used for a reference signal.

2. A reference signal port indication method, applied to a terminal device, and comprising:
receiving first information and second information, wherein the first information indicates one or more reference port indices; the second information indicates that a first set is used as target port indices, or the second information indicates that a part of port indices in the first set are used as one or more target port indices; the first set comprises the one or more reference port indices and one or more port indices obtained by adding X to each of the one or more reference port indices; X is an integer greater than or equal to 4; and the one or more target port indices indicate one or more ports used for a reference signal; and
determining a plurality of target port indices based on the first information and the second information.

3. The method according to claim 1 or 2, wherein the reference port index and the reference port index+X are in a same code division multiplexing CDM group.

4. The method according to any one of claims 1 to 3, wherein when the second information indicates that the first set is used as the target port indices, a quantity of the reference port indices is less than or equal to 2.

5. The method according to any one of claims 1 to 3, wherein when the second information indicates that the part of the port indices in the first set are used as the one or more target port indices, a quantity of the reference port indices is equal to 2.

6. The method according to any one of claims 1 to 5, wherein the first information comprises row index information in a correspondence relationship, and the correspondence relationship indicates an association relationship between a row index and one or more port indices.

7. The method according to claim 6, wherein in the correspondence relationship, the row index is a first value, and the plurality of port indices comprise 7, 9, and 19; or
in the correspondence relationship, the row index is a second value, and the plurality of port indices comprise 11, 21, and 23.

8. The method according to claim 1 or 2, wherein when the reference port indices indicated by the first information comprise 0, 1, and 2, the second information indicates that the port indices 0, 1, and 0+X are used as the target port indices, or the port indices 2, 1+X, and 2+X are used as the target port indices; or
when the reference port indices indicated by the first information comprise 0, 1, and 2, the second information indicates that the port indices 0, 1, and 1+X are used as the target port indices, or the port indices 2, 0+X, and 2+X are used as the target port indices.

9. The method according to claim 8, wherein the first information comprises a row index 20.

10. The method according to claim 1 or 2, wherein when the reference port indices indicated by the first information comprise 3, 4, and 5, the second information indicates that the port indices 4, 5, and 4+X are used as the target port indices, or the port indices 3, 3+X, and 5+X are used as the target port indices; or
when the reference port indices indicated by the first information comprise 3, 4, and 5, the second information indicates that the port indices 4, 5, and 5+X are used as the target port indices, or the port indices 3, 3+X, and 4+X are used as the target port indices.

11. The method according to claim 10, wherein the first information comprises a row index 21.

12. The method according to any one of claims 1 to 11, wherein X=4, or X=6, or X=8, or X=12.

13. The method according to any one of claims 1 to 12, wherein the reference signal comprises a demodulation reference signal DMRS.

14. A communication apparatus, comprising:
a processing module, configured to generate first information and second information; and
a sending module, configured to send the first information and the second information to a terminal device, wherein
the first information indicates one or more reference port indices; the second information indicates that a first set is used as target port indices, or the second information indicates that a part of port indices in the first set are used as one ore more target port indices; the first set comprises the one or more reference port indices and one or more port indices obtained by adding X to each of the one or more reference port indices; X is an integer greater than or equal to 4; and the one or more target port indices indicate one or more ports used for a reference signal.

15. A communication apparatus, comprising:
a receiving module, configured to receive first information and second information, wherein the first information indicates one or more reference port indices; the second information indicates that a first set is used as target port indices, or the second information indicates that a part of port indices in the first set are used as one or more target port indices; the first set comprises the one or more reference port indices and one or more port indices obtained by adding X to each of the one or more reference port indices; X is an integer greater than or equal to 4; and the one or more target port indices indicate one or more ports used for a reference signal; and
a processing module, configured to determine a plurality of target port indices based on the first information and the second information.

16. The apparatus according to claim 14 or 15, wherein the reference port index and the reference port index+X are in a same code division multiplexing CDM group.

17. The apparatus according to any one of claims 14 to 16, wherein when the second information indicates that the first set is used as the target port indices, a quantity of the reference port indices is less than or equal to 2.

18. The apparatus according to any one of claims 14 to 16, wherein when the second information indicates that the part of the port indices in the first set are used as the target port indices, a quantity of the reference port indices is equal to 2.

19. The apparatus according to any one of claims 14 to 18, wherein the first information comprises row index information in a correspondence relationship, and the correspondence relationship indicates an association relationship between a row index and one or more port indices.

20. The apparatus according to claim 19, wherein in the correspondence relationship, the row index is a first value, and the plurality of port indices comprise 7, 9, and 19; or
in the correspondence relationship, the row index is a second value, and the plurality of port indices comprise 11, 21, and 23.

21. The apparatus according to claim 14 or 15, wherein when the reference port indices indicated by the first information comprise 0, 1, and 2, the second information indicates that the port indices 0, 1, and 0+X are used as the target port indices, or the port indices 2, 1+X, and 2+X are used as the target port indices; or
when the reference port indices indicated by the first information comprise 0, 1, and 2, the second information indicates that the port indices 0, 1, and 1+X are used as the target port indices, or the port indices 2, 0+X, and 2+X are used as the target port indices.

22. The apparatus according to claim 21, wherein the first information comprises a row index 20.

23. The apparatus according to claim 14 or 15, wherein when the reference port indices indicated by the first information comprise 3, 4, and 5, the second information indicates that the port indices 4, 5, and 4+X are used as the target port indices, or the port indices 3, 3+X, and 5+X are used as the target port indices; or
when the reference port indices indicated by the first information comprise 3, 4, and 5, the second information indicates that the port indices 4, 5, and 5+X are used as the target port indices, or the port indices 3, 3+X, and 4+X are used as the target port indices.

24. The apparatus according to claim 23, wherein the first information comprises a row index 21.

25. The apparatus according to any one of claims 14 to 24, wherein X=4, or X=6, or X=8, or X=12.

26. The apparatus according to any one of claims 14 to 25, wherein the reference signal comprises a demodulation reference signal DMRS.

27. A communication system, comprising a network device and a terminal device, wherein the network device is configured to perform the method according to any one of claims 1 or 3 to 13, and the terminal device is configured to perform the method according to any one of claims 2 to 13.

28. A communication apparatus, comprising a processor, wherein the processor is coupled to a memory;
the memory is configured to store a computer program or instructions; and
the processor is configured to: execute a part or all of the computer program or instructions in the memory; and when the part or all of the computer program or instructions are executed, the method according to any one of claims 1 to 13 is implemented.

29. A communication apparatus, comprising a processor and a memory, wherein
the memory is configured to store a computer program or instructions; and
the processor is configured to: execute a part or all of the computer program or instructions in the memory; and when the part or all of the computer program or instructions are executed, the method according to any one of claims 1 to 13 is implemented.

30. A chip system, wherein the chip system comprises a processing circuit, and the processing circuit is coupled to a storage medium; and
the processing circuit is configured to execute a part or all of a computer program or instructions in the storage medium; and when the part or all of the computer program or instructions are executed, the method according to any one of claims 1 to 13 is implemented.

31. A computer-readable storage medium, configured to store a computer program, wherein the computer program comprises instructions for implementing the method according to any one of claims 1 to 13.

32. A computer program product, wherein the computer program product comprises computer program code, and when the computer program code is run on a computer, the computer is enabled to perform the method according to any one of claims 1 to 13.
